# EUROPEAN PATENT SPECIFICATION

(11) **EP 3 728 136 B1**
(45) Date of publication and mention of the grant of the patent: **20.11.2024**
(21) Application number: 18892577.0
(22) Date of filing: 18.12.2018
(51) Int. Cl.: C02F 1/52, C05F 7/00, C05B 7/00

(54) **CHEMICAL PROCESSING OF STRUVITE**
CHEMISCHE VERARBEITUNG VON STRUVIT
TRAITEMENT CHIMIQUE DE STRUVITE

(30) Priority: 19.12.2017 SE 1751571
(43) Date of publication of application: 28.10.2020
(73) Proprietor: Easymining Sweden AB, 191 29 Sollentuna (SE)
(72) Inventor: COHEN, Yariv, 752 31 Uppsala (SE); ENFÄLT, Patrik, 756 45 Uppsala (SE); SVÄRD, John, 435 43 Pixbo (SE)
(74) Representative: AWA Sweden AB
(86) International application number: PCT/SE2018/051327
(87) International publication number: WO 2019/125293

(56) References cited:
- EP-A1- 2 287 118
- EP-A1- 2 431 336
- EP-A1- 2 904 892
- WO-A1-2013/191639
- WO-A1-2013/191639
- WO-A1-2020/256622
- US-A- 1 701 110
- ALESSIO SICILIANO ET AL.: "Ammonium Removal from landfill Leachate by Means of Multiple Recycling of Struvite Residues Obtained through Acid Decomposition", APPLIED SCIENCES, vol. 6, no. 11, 2016, pages 375, XP055621054
- SHUJUN ZHANG ET AL.: "Repeated use of MgNH4PO4*6H2O residues for ammonium removal by acid dipping", DESALINATION, vol. 170, 2004, pages 27 - 32, XP004702604
- ALINE M. BENNETT ET AL.: "Improving potassium recoverywith new solubilityproduct values for K-struvite", JOURNAL OF ENVIRONMENTAL ENGINEERING AND SCIENCE, vol. 12, no. 4, 2017, pages 93 - 103, XP009520354, DOI: 10.1680/jenes.17.00019

## Description

### TECHNICAL FIELD

The present technology relates in general to methods and arrangements for chemically processing of struvite, and in particular to methods and arrangements for decomposing struvite for recovery of at least one of ammonia, phosphorus, magnesium and potassium from the struvite molecule itself.

### BACKGROUND

Nitrogen is essential to life and is among the nutrients consumed in the largest quantities by all organisms. Ammonia is synthesized at a massive scale by the fertilizer industry. Approximately 100 Mt of reactive nitrogen is synthesized annually worldwide using the Haber-Bosch process. This anthropogenic ammonia production is in similar magnitude to natural nitrogen fixation, which is estimated to about 150 to 200 Mt nitrogen per year on earth.

Humans and animals excrete a significant fraction of the nutrients contained in the food they ingest. Alongside other agricultural sources, these nutrients find their way back into the environment as municipal wastewater effluents, landfill leachate from disposed organic matter, agro food processing effluents, etc. Anthropogenic loading of nutrients is the main cause for eutrophication of receiving water bodies. Therefore, wastewater treatment plants are needed for treating nutrient rich effluents.

Both processes of synthesizing ammonia and removing it from wastewater are energy and resource intensive. In the Haber-Bosch process, ammonia is synthesized by combining atmospheric nitrogen with hydrogen gas at a temperature and pressure of approximately 450° C and 30 MPa respectively. The ammonia production industry relies heavily on natural gas as a non- renewable precursor for hydrogen and energy. Ammonia synthesis is considered to be responsible for about 5% of the world's natural gas consumption. It is estimated that global ammonia production accounts for 1.3% of the world's fossil fuel-derived energy use, contributing considerable to greenhouse gas emissions.

In typical environmental conditions the majority of nitrogen in wastewaters exists as dissolved ammonium ions. To achieve nitrogen discharge goals, wastewater treatment plants employ biological nitrogen removal processes, such as nitrification, which is commonly followed by denitrification to ultimately convert ammonia to atmospheric nitrogen.

Biological processes for nitrogen removal are costly and complex. The operating bacteria in such processes are sensitive to a wide range of toxic compounds. Effluents with high salinity cannot be processed. In addition, the performance of biological treatment is very temperature dependent with low efficiency at cold climates. The operational bacteria require long retention times which means large basins. Furthermore, the process is also energy intensive requiring massive aeration to oxidize all ammonium to nitrate. In order to obtain an efficient conversion of nitrate to nitrogen gas by de-nitrification an expensive source of carbon such as methanol is usually needed. The process also generates considerable amounts of climate gases in form of nitrous oxides. And in the end, the reactive nitrogen is destroyed and converted back to atmospheric nitrogen which need to be recovered again by the resource intensive Haber-Bosch process.

The existing technologies for nitrogen removal from effluents are costly and complex. Beside biological treatment, the alternatives are: a) ammonia stripping - require high temperature and/or high pH, high capital and operational costs for treating streams with relatively low ammonium content, b) ammonia adsorption - e.g. adsorption on zeolite requires chemicals for regeneration, high capital and operational costs and difficult to recover ammonia and c) break point chlorination - high operational costs due to required chemicals, nitrogen is lost and not recovered.

A logical conclusion is that nitrogen-containing effluents should be viewed as a nitrogen resource instead of a waste and nitrogen-containing effluents should be exploited through the recovery of nitrogen in forms that could be employed by agriculture or other industries. In Sweden, an environmental goal for recovery of nitrogen from domestic wastewater is being proposed.

Phosphorus is also an important element essential to life. The release of phosphorous to surface waters, and its consequent contribution to eutrophication, has also led to increasing concerns about water quality. Policies were therefore implemented throughout the world, to reduce the levels of phosphorus entering surface waters, by the implementation of technologies to remove phosphorus from domestic and industrial wastewater. In contrast to nitrogen, mineral phosphorus resources are considered limited and finite. In addition, most of the world's phosphorus reserves are controlled by only few countries. Therefore, there is an increasing interest for recycling and beneficial re-use of the phosphorus present in wastes. Several countries have recently introduced a mandatory requirement for recovery of phosphorus from municipal wastewater.

Potassium is also a nutrient consumed in large quantities by all organisms. Similar to phosphorus, potassium is also extracted from limited rock deposits of minerals or from salt lakes. The potassium reserves in the world are also controlled by only a few countries. Recovery of potassium is still not discussed much in society due to that it is not contributing to eutrophication like nitrogen and phosphorus since it is not a limiting nutrient in aquatic environments. In addition, there are no viable technologies today for recovery of potassium from dilute effluents.

Precipitation of struvite from wastewater has been used for producing struvite as a fertilizer. Struvite is a crystal, which is formed with equal molar concentrations of magnesium, ammonium and phosphate combined with six water molecules (MgNH₄PO₄·6H₂O). Its molecular weight is 245.43 g per mole, and it is sparingly soluble under neutral and alkaline conditions but readily soluble in acid. The ammonium ion in the struvite crystal lattice can be exchanged with other alkali ions such as potassium or sodium. Hence, there are two additional forms of struvite: a) potassium-struvite (MgKPO₄·6H₂O) with a molecular weight of 266.46 g per mole, and b) sodium struvite (MgNaPO₄·6H₂O) with a molecular weight of 250.36 g per mole.

Struvite can easily be precipitated from wastewater if the magnesium to other nutrient ratio (N+P, or K+P) is sufficient and the pH is adjusted to neutral or alkaline levels. Struvite precipitation from wastewaters is readily applied in practice in prior art. The applications of struvite precipitation have so far been mainly focused on recovery of phosphorus. Most wastewaters contain sufficient ammonium for phosphorus removal as struvite and the only addition required for struvite precipitation is typically a magnesium source.

Ammonium nitrogen is normally present in effluents at much higher concentrations compared to phosphorus. In order to remove nitrogen in form of struvite from wastewater, large amounts of external phosphorus and magnesium are needed. However, it is impractical to convert high quality sources of phosphorus to struvite just in order to recover ammonium-nitrogen. Such a process would also not be economically viable since the commercial value of struvite is low.

Struvite has been reported in the literature to be precipitated from many different types of wastewaters. Possible applications include: swine wastewater, calf manure wastewater, leather tanning wastewater, sewage treatment side-streams, dairy wastewater, sewage sludge digester slurry, digester supernatant, industrial wastewater, landfill leachate, lagoon wastewater, poultry manure wastewater, agro-industrial wastes, slaughterhouse wastewater, biogas digester effluents, animal manure, food processing effluents, source separated urine, and fertilizer plant wastewater.

State-of-the-art struvite precipitation is focused on phosphorus removal. This is usually done by addition of magnesium in form of magnesium chloride and sodium hydroxide for pH adjustment or alternatively addition of magnesium hydroxide which provides both a source of magnesium and hydroxyl ions for pH adjustment. There are generally two reasons for recovering struvite from domestic wastewater, the first is to solve struvite scaling problems in the wastewater treatment plant. The second reason is to enable recovery of phosphorus, which is a limited resource. EP2904892A1 discloses methods for extracting at least a part of the phosphorus content of a slurry, such as manure, wastewater and/or sludge by precipitating it as ammonium magnesium phosphate. Further means of recycling struvite residues are known from "Ammonium removal from landfill leachate by means of multiple recycling of struvite residues obtained through acid decomposition", A. Siciliano et al, Applied Sciences, vol 6, no. 11, page 375.

Precipitation of struvite is usually performed in a special crystallizer which enables to form struvite pellets of specific size range that can be spread on arable land using conventional spreading equipment. The precipitated struvite is thereafter commonly used as a slow release phosphorus fertilizer. To produce struvite pellets is a complicated task. The process requires a long solid retention time of between 8 to 50 days whereas the typical hydraulic retention time is below 10 min. In order to keep the pellets fluidized in the reactor, recycled flow relative to the inflow of up to ca 25% is needed. The installation is complex and costly. It is clear that if pellets are not required struvite can be precipitated in a simple reactor with a short reaction time followed by simple solid liquid separation such as filtration and/or sedimentation.

The main idea behind state-of-the-art precipitation of struvite is to use it as a fertilizer. However, struvite is not an optimal fertilizer. Struvite contains too much magnesium in relation to nitrogen, phosphorus or potassium. For example, according to the Food and Agriculture Organization of the United Nations, the nutrient requirements for a potato crop is 1:78:5:36 in molar ratio of Mg:N:P:K. The nutrient requirement for winter wheat is 1:18:1:7 in molar ratio of Mg:N:P:K. The actual fertilizer requirements depend on the type of crop and the ability of the soil to deliver for example magnesium or potassium by release from clay or soil minerals. A major problem with struvite as a fertilizer is also that it is not water-soluble. This means that the nutrients in struvite are not readily plant available. Therefore, struvite cannot be used as a main fertilizer but can only be used as a supplemental slow release fertilizer for niche applications. It has been recently shown that the plant availability of struvite is being suppressed by a high magnesium content in the soil. This can further limit large scale application of struvite as a fertilizer. Due to the above described reasons the fertilizer value, as well as, economic value of struvite is generally low.

There is a need for a method and arrangements that can enable to recover simultaneously all major plant nutrients from wastewater: phosphorus, nitrogen and possibly potassium.

### SUMMARY

A general object is to provide methods and arrangements that enables recovering of major plant nutrients from wastewater.

The above object is achieved by methods and devices according to the independent claims. Preferred embodiments are defined in dependent claims.

In general words, in a first aspect, a method for decomposing struvite comprises dissolving of a feed material comprising struvite in HCl, forming an acid solution. Phosphorus is removed from the acid solution, forming a phosphorus-depleted solution. A neutralized solution is formed by adding a base to the phosphorus-depleted solution. A chloride salt solution is formed from the neutralized solution.

In a second aspect, a method for recovering at least one of nitrogen, phosphorus and potassium from waste material comprises precipitating of struvite from an initial liquid of waste material, by adding a magnesium source to the initial liquid of waste material and adjusting a pH of the initial liquid of waste material to an alkaline pH. The precipitated struvite is separated from the initial liquid of waste material. The separated struvite is decomposed by a method according to the first aspect.

In a third aspect, an arrangement for decomposing struvite comprises a dissolver container, a phosphorus removing section, a neutralizer container and a chloride salt solution handling section. The dissolver container is configured for dissolving a feed material comprising struvite in HCl, forming an acid solution. The dissolver container has an inlet for the feed material comprising struvite, an inlet for the HCl, and an outlet for the acid solution. The phosphorus removing section is configured for removing phosphorus from the acid solution, forming a phosphorus-depleted solution. The phosphorus removing section has an inlet for the acid solution connected to the outlet of the dissolver container, an outlet for substances comprising the removed phosphorus and an outlet for the phosphorus-depleted solution. The neutralizer container is configured for forming a neutralized solution by adding a base to the phosphorus-depleted solution. The neutralizer container has an inlet for the phosphorus-depleted solution connected to the outlet for the phosphorus-depleted solution of the phosphorus removing section, an inlet for the base, and an outlet for the neutralized solution. The chloride salt solution handling section is configured for forming a chloride salt solution. The chloride salt solution handling section has an inlet for the neutralized solution connected to the outlet for the neutralized solution of the neutralizer container and an outlet for the chloride salt solution.

In a fourth aspect, an arrangement for recovering at least one of nitrogen, phosphorus and potassium from waste material comprises a waste material treatment tank and an arrangement for decomposing struvite. The waste material treatment tank has an inlet for an initial liquid of waste material and an inlet for a magnesium source and optionally a base. The waste material treatment tank is configured for precipitating struvite from the initial liquid of waste material by adding the magnesium source and adjusting a pH of the initial liquid of waste material to an alkaline pH. The waste material treatment tank comprises a separator configured for separating the precipitated struvite from the initial liquid of waste material. The waste material treatment tank has an outlet for liquid of waste material separated from the precipitated struvite, and an outlet for the precipitated struvite. The arrangement for decomposing struvite is arranged according to the third aspect.

One advantage with the proposed technology is that a cost effective method for decomposition of struvite is presented, which in turn enables formation of valuable ammonium phosphate using the nitrogen content in the struvite itself and at the same time to enable reuse of the magnesium source for repeated phosphorus/nitrogen/potassium precipitation. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 illustrates a flow diagram of steps of an embodiment of a method for decomposing struvite;
FIG. 2 illustrates schematically an embodiment of an arrangement for decomposing struvite;
FIG. 3 illustrates a flow diagram of steps of an embodiment of a method for recovering at least one of nitrogen, phosphorus and potassium from waste material;
FIG. 4 illustrates an embodiment of an arrangement for recovering at least one of nitrogen, phosphorus and potassium from waste material;
FIG. 5 illustrates an embodiment of a step of forming a neutralized solution;
FIG. 6 illustrates schematically an embodiment of a neutralizer container;
FIG. 7 illustrates another embodiment of a step of forming a neutralized solution;
FIG. 8 illustrates schematically another embodiment of a neutralizer container;
FIG. 9 illustrates an embodiment of steps of forming a neutralized solution and forming a chloride salt solution;
FIG. 10 illustrates schematically embodiments of a neutralizer container and a chloride salt solution handling section;
FIG. 11 illustrates an embodiment of a step of removing phosphorus from an acid solution;
FIG. 12 illustrates another embodiment of a step of removing phosphorus from an acid solution;
FIG. 13 illustrates yet another embodiment of a step of removing phosphorus from an acid solution;
FIG. 14 illustrates schematically an embodiment of a phosphorus removing section;
FIG. 15 illustrates schematically another embodiment of a phosphorus removing section;
FIG. 16 illustrates schematically yet another embodiment of a phosphorus removing section;

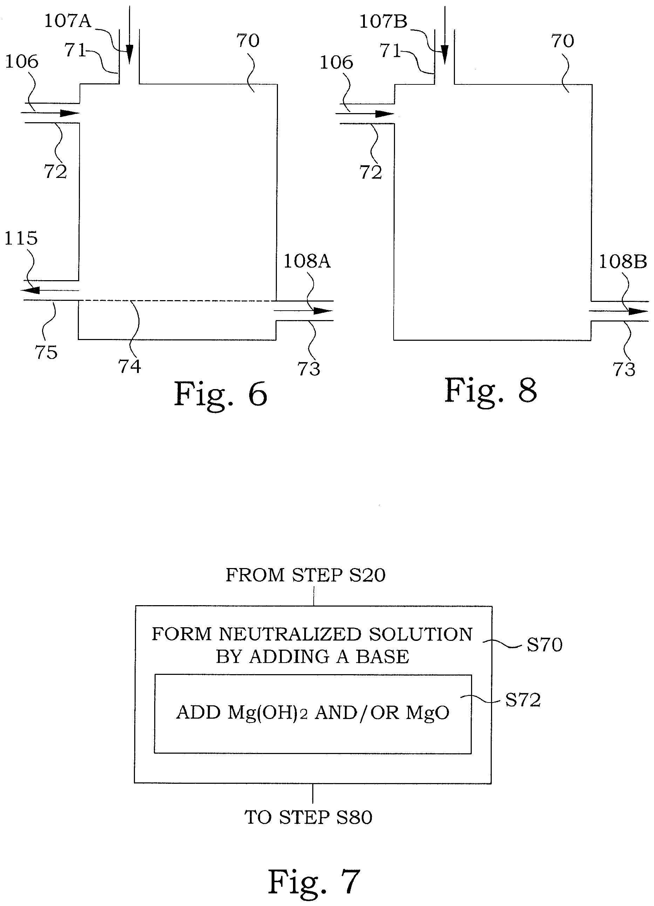

FIG. 7 illustrates yet another embodiment of a step of removing phosphorus from an acid solution;

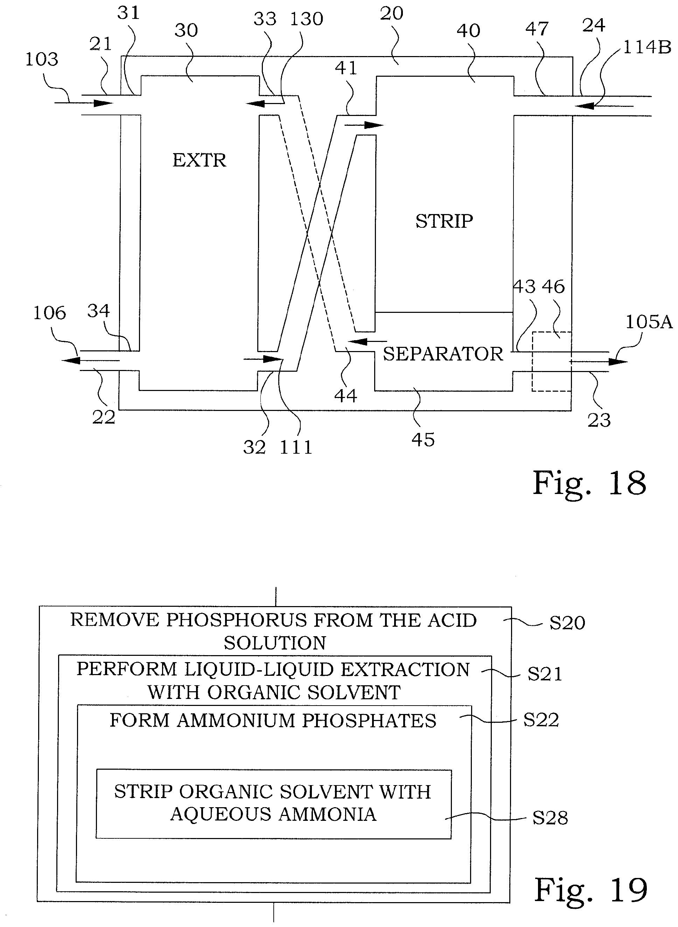

FIG. 18 illustrates schematically yet another embodiment of a phosphorus removing section;
FIG. 19 illustrates yet another embodiment of a step of removing phosphorus from an acid solution;

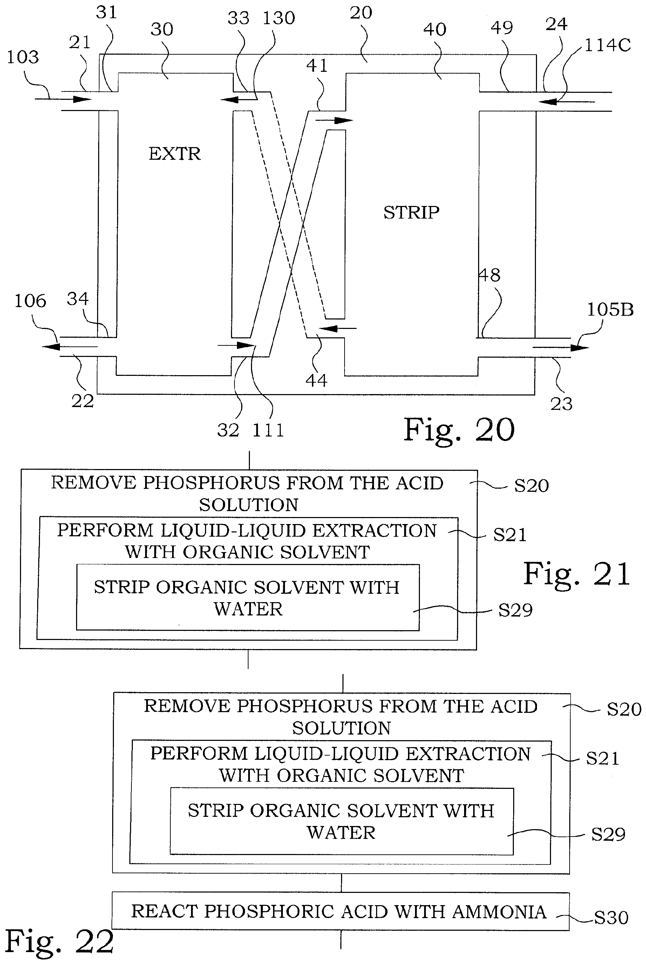

FIG. 20 illustrates schematically yet another embodiment of a phosphorus removing section;
FIG. 21 illustrates yet another embodiment of a step of removing phosphorus from an acid solution;
FIG. 22 illustrates yet another embodiment of a step of removing phosphorus from an acid solution;

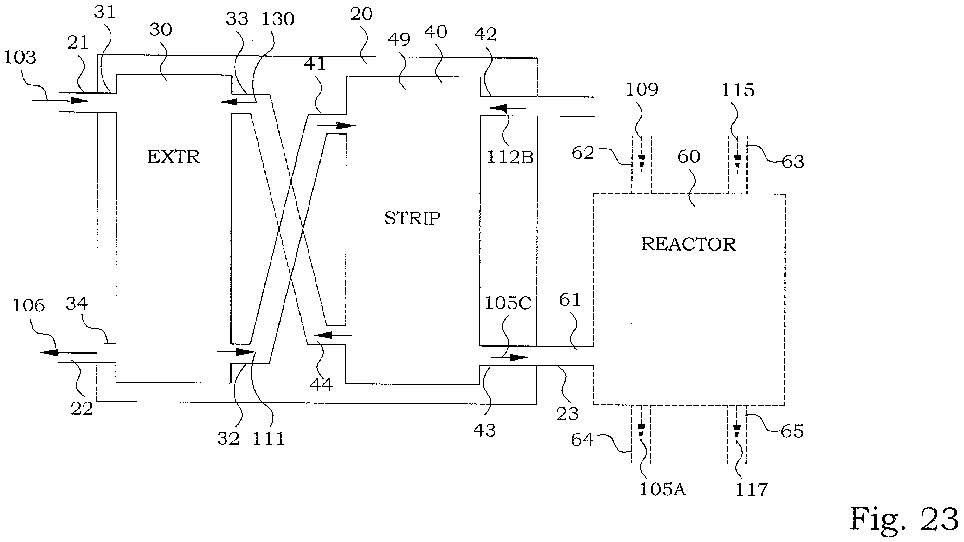

FIG. 23 is a schematic illustration of embodiments of parts of an arrangement for decomposing struvite;

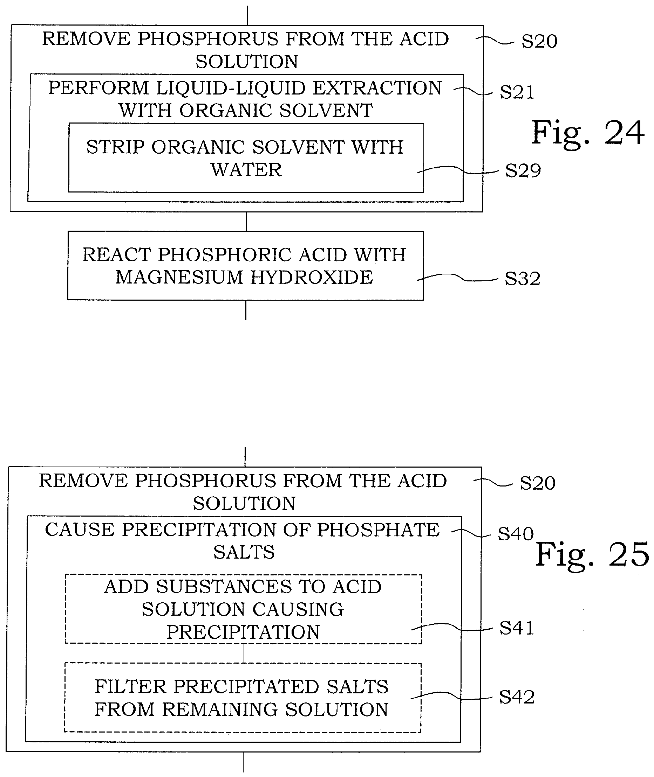

FIG. 24 illustrates steps of an embodiment of a part of a method for struvite decomposition;
FIG. 25 illustrates yet another embodiment of a step of removing phosphorus from an acid solution;

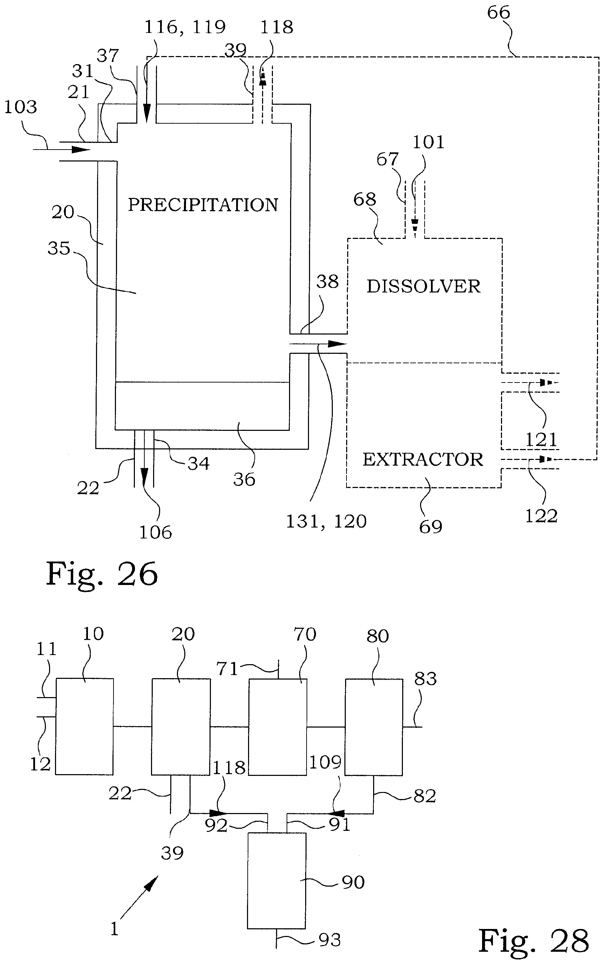

FIG. 26 illustrates schematically yet another embodiment of a phosphorus removing section;

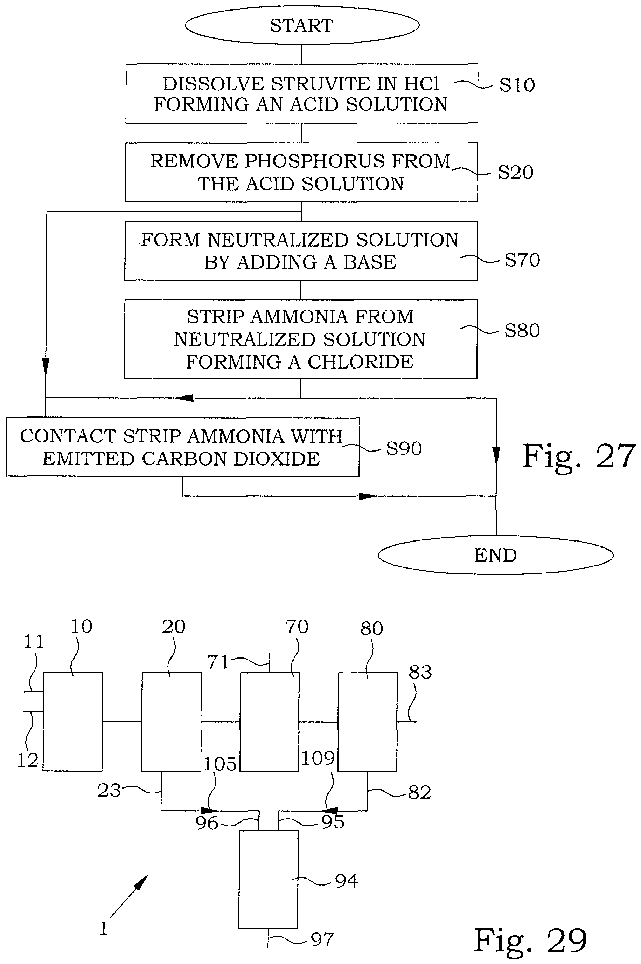

FIG. 27 illustrates an embodiment of a method for decomposing struvite;
FIG. 28 illustrates an embodiment of an arrangement for decomposing struvite;
FIG. 29 illustrates schematically an embodiment of a part of an arrangement for struvite decomposition;

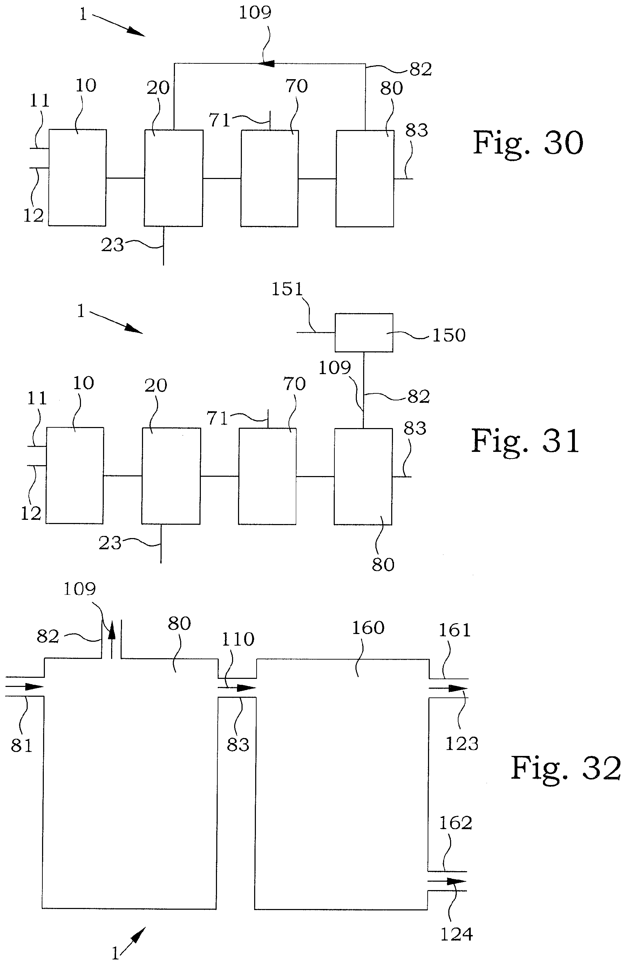

FIG. 30 illustrates an embodiment of an arrangement for the stripped ammonia to be used as ammonia source for forming of ammonium phosphates;
FIG. 31 illustrates an arrangement for reacting ammonia with acids; and
FIG. 32 illustrates schematically an embodiment of a part of an arrangement for struvite decomposition.

### DETAILED DESCRIPTION

Throughout the drawings, the same reference numbers are used for similar or corresponding elements.

If an inexpensive source of magnesium and phosphorus was available, the potential is there, by use of struvite precipitation, to recover ammonia from nutrient-rich wastewaters, rather than biologically convert it back to atmospheric nitrogen.

Common to all prior art relating to struvite decomposition is that the focus is solely on recovery or removal of ammonium nitrogen. None of the prior art processes can enable recovery of phosphorus and reuse of the magnesium source for repeated phosphorus precipitation in form of struvite. In addition, none of the prior art can enable recovery of potassium from wastewater.

There is thus a need for a robust process that can enable decomposition of struvite to enable recovery of nitrogen and reuse of the magnesium and phosphorus sources for subsequent ammonium nitrogen removal in which the regeneration efficiency is not affected by co-precipitation of calcium phosphate, calcium carbonate, magnesium carbonate or potassium struvite.

There is a need for a process that can enable reuse of the magnesium and phosphorus from struvite separately and not in a combined magnesium phosphate form for enabling to adjust the Mg to P ratio for optimal ammonium nitrogen removal from wastewater.

There is a need for a process that can enable reuse of the magnesium and phosphorus from struvite in a reactive form such as e.g. di-magnesium phosphate of high quality. The constant quality of recovered di-magnesium phosphate should be assured independent on the struvite composition and number of repeated cycles.

There is a need for a robust method for struvite decomposition that is not energy intensive.

There is a need for a method for struvite processing that can omit the need to precipitate struvite in form of pellets in special fluidized bed reactors which require high capital and operational costs during wastewater treatment.

There is a need for a method for struvite decomposition with a favourable mass balance in which input chemicals are converted into final commercial products.

There is a need for a cost effective method for decomposition of struvite to enable formation of valuable ammonium phosphate using the nitrogen content in the struvite itself and at the same time to enable reuse of the magnesium source for repeated phosphorus precipitation.

There is a need for a simple method to enable recovery of potassium from wastewater.

According to the present technology, an inexpensive source of magnesium and/or phosphorus can be derived from the struvite molecule itself. This magnesium and/or phosphorus can thereafter be used for struvite precipitation from water effluents. This enables the recovery of the ammonium, phosphorus or potassium that is bound within struvite but originates from the water effluents.

Several attempts were made in the literature to provide a process for decomposing struvite to enable recovery or removal of ammonia.

Extensive research was dedicated to the thermal decomposition of struvite to enable release of ammonia from struvite by heating e.g. according to Stefanowicz et al. 1992. The main disadvantage of this approach is that after thermal decomposition of struvite a magnesium pyrophosphate residue is formed which is not effective in precipitating ammonium nitrogen from wastewater.

Thermal decomposition of struvite occurs in several steps. At the first step, ammonium struvite (MgNH₄PO₄·6H₂O) is converted to dittmarite (MgNH₄PO₄·H₂O) by the removal of water. Dittmarite is more thermally stable than struvite. Further heating of the formed dittmarite results in the release of additional water and ammonia forming eventually magnesium pyrophosphate (Mg₂P₂O₇).

Farhana, 2015, suggested to thermally decompose ammonium struvite in a fluidized bed reactor in which struvite pellets are kept fluidized in the reactor for 2 to 4 hours at a temperature of 85°C and at a relative humidity of 95%. The aim was to decompose struvite into di-magnesium phosphate instead of magnesium pyrophosphate by having a relatively low temperature and high humidity. The disadvantages of this process include high complexity due to requirement for struvite pellets of a certain size and hardness in order to be kept fluidized. The conversion of struvite to dimagnesium phosphate was found to be incomplete for several of the struvite pellets tested. The hardness and size of the pellets is a main factor regarding conversion efficiency and to get the process operational. Soft pellets could not be processed since they form dust. In addition the process is energy intensive requiring large amount of hot air and steam.

Common to all thermal struvite conversion processes is that the processes are not suitable for decomposing potassium struvite or calcium phosphates. Many wastewaters contain considerable amounts of dissolved potassium and calcium. This means that when struvite is precipitated from such wastewater at a high pH a mixture of several forms of struvite is usually present such as ammonium struvite (MgNH₄PO₄·6H₂O) together with potassium struvite (MgKPO₄·6H₂O). The presence of dissolved calcium leads to co-precipitation of calcium phosphate together with struvite. Since thermal struvite regeneration is based on thermally removing ammonia in a gaseous form it cannot regenerate calcium phosphates or potassium struvite. This means that if the struvite decomposition product from thermal processes is reused for wastewater treatment, the efficiency will be declining rapidly with time due to an accumulation of calcium and potassium in the residue that cannot be regenerated.

Zhang, S. et al. 2004 suggested a process to decompose ammonium struvite in a hot acid solution at pH between 4 and 5.5. The principle was to convert struvite to di-magnesium phosphate due to that di-magnesium phosphate has a lower solubility compared to struvite at slightly acidic pH and at temperatures above 25°C. The disadvantages of this process include low efficiency of conversion of struvite to di-magnesium phosphate. In addition, the process cannot regenerate the phosphorus from co-precipitated calcium phosphate since the solubility of calcium phosphate is considerably lower than that of di-magnesium phosphate at acidic pH. Furthermore, high phosphorus solubility at low pH results in considerable phosphorus losses in each regeneration cycle.

Zhang, T. et al. 2009 tested to decompose ammonium struvite thermally in a hot aqueous alkaline solution. The idea was to release the ammonia first to the aqueous solution forming tri-magnesium phosphate. The ammonia in the hot alkaline solution is converted into gaseous form and can be separated. The process has several disadvantages. The conversion of struvite into tri-magnesium phosphate was found to be incomplete. The process cannot regenerate the phosphorus from co-precipitated calcium phosphate since calcium phosphates are not soluble in alkaline solutions which means that the decomposition product is gradually being fouled with calcium decreasing its efficiency.

Huang et al. 2015 suggested a process for decomposing struvite by addition of sodium hypochlorite to form di-magnesium phosphate. The main disadvantage of the process is that nitrogen cannot be recovered and is lost in form of nitrogen gas. In addition, the process has high operational costs and similar to other struvite decomposition processes cannot regenerate potassium struvite or calcium phosphates which reduces the efficiency of the decomposition product if repeated used in real wastewater.

Huang et al. 2015 further suggested a process for decomposition of struvite by using microwave radiation. The struvite is mixed with sodium hydroxide and treated by microwave radiation to release ammonia and convert struvite into a sodium magnesium phosphate compound which is claimed to be reactive for aqueous ammonia removal by struvite precipitation. The disadvantages of this process includes high operational and capital costs, need for complicated equipment and requirement for large amounts of sodium hydroxide. In addition, the process is not suitable for regeneration of potassium struvite or calcium phosphates which results in poor ammonia removal capacity over time.

Hao et al., 2011 suggested a process for electrochemical decomposition of struvite. The main disadvantage is that nitrogen cannot be recovered and is lost in form of nitrogen gas as well as high capital and operational costs.

However, according to the here presented technology, struvite is instead dissolved using hydrochloric acid (HCl). The acid solution is first freed from phosphorus ions and then ammonium and magnesium components are separated. The extracted phosphorus, ammonium and magnesium are provided in forms that are either commercially attractive or can be re-utilized in e.g. a wastewater application. There are many attractive solutions of the different part processes.

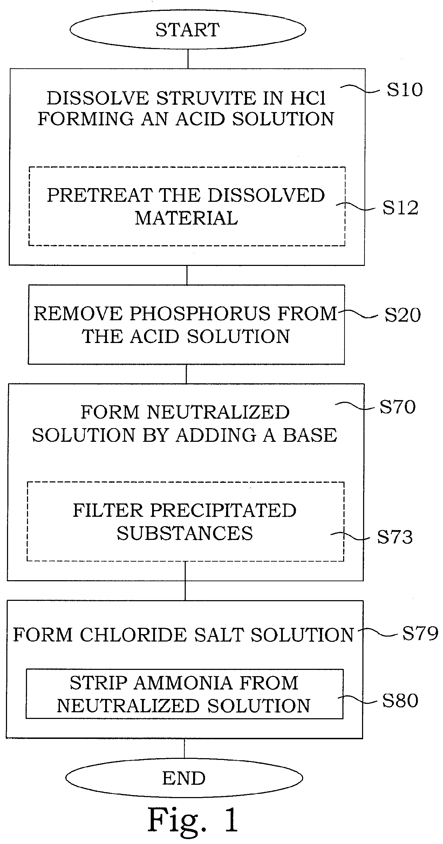

Figure 1 illustrates a flow diagram illustrating steps of an embodiment of a method for decomposing struvite. In step S10, a feed material comprising struvite is dissolved in HCl. This dissolving results in the formation of an acid solution. This acid solution comprises phosphate ions, magnesium ions and ammonium ions.

The dissolution of the struvite in hydrochloric acid takes place according to the following chemical reaction:

NH₄MgPO₄·6H₂O + 3 HCl → H₃PO₄ + NH₄Cl + MgCl₂ + 6H₂O

Hydrochloric acid is produced as a by-product from several industrial processes such as: the chlor-alkali industry, production of vinyl chloride, production of polytetrafluoroethylene, incineration of PVC, production of sodium sulfate, production of potassium sulfate, combustion of chlorine, production of perchloroethylene, production of dichlormethane, production of trichloroethylene, as a by-product of phosagene-polyurethane chain.

Since hydrochloric acid is an unavoidable by-product for production of several valuable products, the production of such products is in many cases limited by finding an outlet for the by-product hydrochloric acid. Usually, this is solved by industrial symbiosis, i.e. the by-product hydrochloric acid is used as a raw material for production of another product such as calcium chloride, magnesium chloride, etc.

According to the invention, the dissolution of struvite is performed in a way to enable production of a leach solution with as high concentration as possible. The production of a concentrated solution during struvite dissolution enables the recovery of the chloride from hydrochloric acid in form of e.g. concentrated calcium chloride as will be discussed further in the text. This feature of the present invention enables to integrate struvite processing with existing industries e.g. the chlor-alkali industry in which the main product is sodium hydroxide, and by-product hydrochloric acid is commonly neutralized with lime to produce a concentrated calcium chloride solution.

In one embodiment, the step S10 may comprise an optional step S12, in which the dissolved material in HCl is pretreated to form the acid solution. The pretreating may comprise separating of undissolved substances. The pretreating may also comprise removing of organic compounds.

As discussed in the introduction, struvite is rarely precipitated in a pure form of ammonium-struvite. Wastewater usually contain significant amounts of calcium, potassium and carbonates which usually result in a significant co-precipitation of calcium phosphates, calcium carbonates, potassium struvite, and magnesium carbonate.

According to the present technology, the above mentioned co-precipitates do not interfere with the struvite processing method. This makes the process according to the present invention a robust technology in which mixtures of different struvite precipitates originating from different applications and thus having different chemical composition can be processed in a single central plant.

Co-precipitated calcium phosphate is dissolved in hydrochloric acid according to the following equation:

Ca₃(PO₄)₂ + 6 HCl → 2 H₃PO₄ + 3 CaCl₂

Co-precipitated calcium carbonate is dissolved in hydrochloric acid according to the following equation:

CaCO₃ + 2 HCl → CaCl₂ + CO₂↑ + H₂O

Co-precipitated magnesium carbonate is dissolved in hydrochloric acid according to the following equation:

MgCO₃ + 2 HCl → MgCl₂ + CO₂↑ + H₂O

Co-precipitated potassium struvite is dissolved in hydrochloric acid according to the following equation:

NH₄KPO₄·6H₂O + 3 HCl → H₃PO₄ + KCl + MgCl₂ + 6H₂O

Independent on the composition of the co-precipitates, the struvite leach solution will contain the following elements in a soluble form: phosphate, ammonium, magnesium, and optionally calcium and/or potassium.

The cations are in the form of chlorides and phosphate in the form of phosphoric acid. Carbonates are converted to carbon dioxide during the dissolution which separates as gas from the struvite leach solution.

Precipitated struvite can contain some acid-insoluble components such as sand, etc. The non-insoluble residue is therefore separated with any suitable solid/liquid separation technique such as filtration, centrifugation, sedimentation, etc.

Since some organic material can also co-precipitate with struvite, some dissolved organic matter can enter the struvite leach solution. The dissolved organic matter is therefore preferably separated from the struvite leach solution. Several options exist for separation of dissolved organic matter such as adsorption on activated carbon, chemical oxidation, flocculation, etc.

The struvite leach solution after pretreatment is ready for chemical processing.

A main advantage of the present technology is that the struvite entering to the processing plant does not need to be in a form of pellets as in state-of-the-art struvite precipitation technologies. The main reason is that the intention is not to spread the struvite on agricultural land but instead dissolve it in hydrochloric acid. Since pellets are not required, the struvite precipitation process can be done in a simple and low cost manner. Struvite can be precipitated in a simple reactor with a short reaction time followed by simple solid liquid separation such as by filtration and/or sedimentation.

In step S20, phosphorus is removed from the acid solution. This results in the forming of a phosphorus-depleted solution. The removed phosphorus may, as will be discussed further below, be utilized for forming precipitator substances for waste water treatment, or may be allowed to react and form different kinds of commercially valuable substances, such as different kinds of fertilizers.

As will be discussed further below, there are two principal ways of separating phosphorus from the struvite leach solution: a) using solvent extraction, and b) by chemical precipitation.

When the phosphorus is removed, a further easily performed separation of the other components is enabled. In step S70, a neutralized solution is formed by adding a base to the phosphorus-depleted solution.

In one embodiment, where precipitates are formed during the neutralization, preferably magnesium hydroxide, the step S70 may comprise an optional step S73, in which the precipitates are filtered from the neutralized solution.

In step S79, a chloride salt solution is formed from the neutralized solution. Such a chloride salt solution may be used as such as an end product, or may be further processed.

In one embodiment, the step S79 comprises a step S80, in which ammonia is stripped from the neutralized solution. This results in the previous mentioned forming of the chloride salt solution. The stripped ammonia may, as will be discussed further below be utilized for forming different kinds of fertilizers, or for forming ammonium bicarbonate. The stripped ammonia may also be recovered by reacting with different acids.

There are also other possibilities, as will be discussed further below.

The magnesium content becomes available, typically as magnesium hydroxide or magnesium carbonate during the neutralization process or as magnesium chloride resulting from an ammonia stripping process. This magnesium may, as discussed below, preferably be reused as a magnesium source for waste water treatment, but may also be turned into other products of commercial interest.

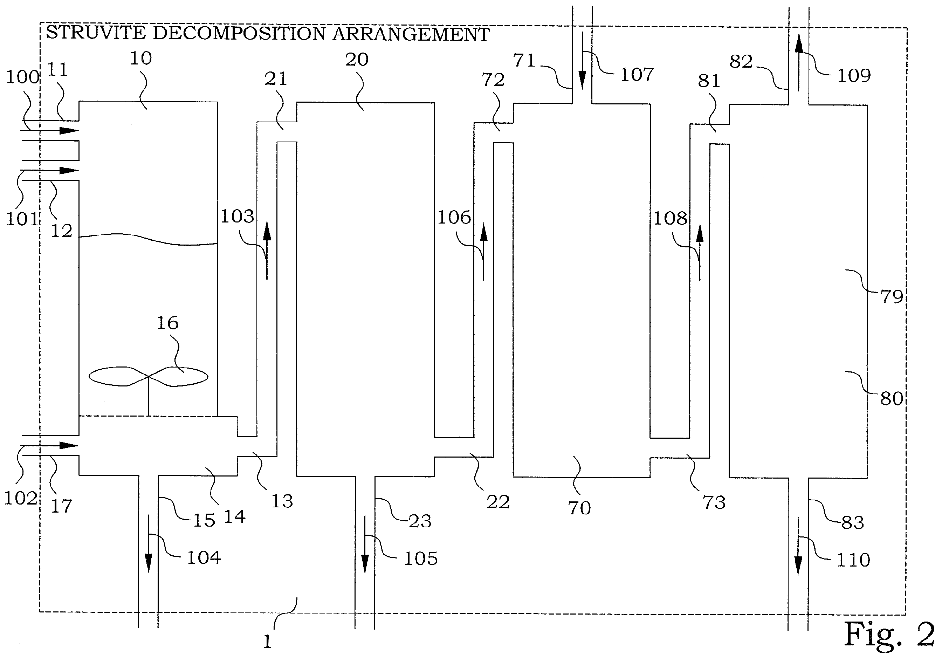

Figure 2 illustrates schematically an embodiment of an arrangement 1 for decomposing struvite. This arrangement 1 for decomposing struvite comprises four main parts; a dissolver container 10, a phosphorus removing section 20, a neutralizer container 70 and a chloride salt solution handling section 79. The chloride salt solution handling section 79 may be constituted by an ammonia removal section 80. The dissolver container 10 has an inlet 11 for feed material comprising struvite 100 and an inlet 12 for hydrochloric acid (HCl) 101. The dissolver container 10 is configured for dissolving a feed material comprising struvite in HCl, which results in the forming of an acid solution 103. The dissolver container 10 may comprise different equipment 16 for facilitating the dissolving process, which in the figure is illustrated by an agitator. The dissolver container 10 also comprises an outlet 13 for the acid solution 103.

In one embodiment, the dissolver container 10 further comprises a pretreatment device 14. In this device, different processes for purifying the acid solution may be performed. Examples of such processes is e.g. separation of undissolved substances and/or removal of organic compounds. Organic compounds may e.g. be removed by use of activated carbon, chemical oxidation or other processes, as such well known in the art. Additional substances 102 may thereby be added through a pretreatment inlet 17 and removed impurities 104 may be exited through an impurity outlet 15.

In the embodiment of Figure 2, the phosphorus removing section 20 is configured for removing phosphorus from the acid solution 103, thereby forming a phosphorus-depleted solution 106. To this end, the phosphorus removing section 20 has an inlet 21 for the acid solution 103 connected to the outlet 13 of the dissolver container 10. The phosphorus removing section 20 has furthermore an outlet 23 for substances 105 comprising the removed phosphorus. The phosphorus removing section 20 also has an outlet 22 for the phosphorus-depleted solution 106.

The details of the phosphorus removing section 20 can be implemented in many different ways, of which some examples are presented further below. Some of the phosphorus removing processes are, as such, known in prior art, however, not earlier implemented for removing phosphorus from a solution of dissolved struvite.

The neutralizer container 70 is configured for forming a neutralized solution 108. This is achieved by adding a base 107 to the phosphorus-depleted solution 106. The neutralizer container 70 has an inlet 72 for the phosphorus-depleted solution 106 connected to the outlet 22 for the phosphorus-depleted solution 106 of the phosphorus removing section 20. The neutralizer container 70 further has an inlet 71 for the base 107. The neutralizer container 70 also has an outlet 73 for the neutralized solution 108.

Depending on which base that is used, the neutralization may cause precipitation of certain compounds. In such cases, different types of filters may be necessary to introduce. This is described more in detail below.

The chloride salt solution handling section 79 has an inlet 81 for the neutralized solution 108 connected to the outlet 73 for the neutralized solution 108 of the neutralizer container 70. The chloride salt solution handling section 79 has further an outlet 83 for the chloride salt solution 110.

In one embodiment, the chloride salt solution handling section 79 is constituted by an ammonia removal section 80, which ammonia removal section 80 is configured for stripping of ammonia 109 from the neutralized solution 108. Thereby a chloride salt solution 110 is formed. The ammonia removal section 80 therefore has an outlet 82 for the stripped ammonia 109.

The method according to Figure 1 and the arrangement according to Figure 2 can be operated as such as methods and arrangements for general decomposition of struvite. The struvite is thereby decomposed into valuable substances comprising the components phosphorus, typically in the form of phosphate ions, nitrogen, typically in the form of ammonia, and magnesium, typically as a salt.

However, the decomposition of struvite can also be implemented as a part of other industrial processes. As mentioned in the background, some waste water treatment approaches extracts nitrogen and phosphorus by precipitation of struvite. By having access to the above presented decomposition of struvite, such a waste water treatment can be developed further to be more economical and efficient, in particular if the separated magnesium products can be reused for the struvite precipitation.

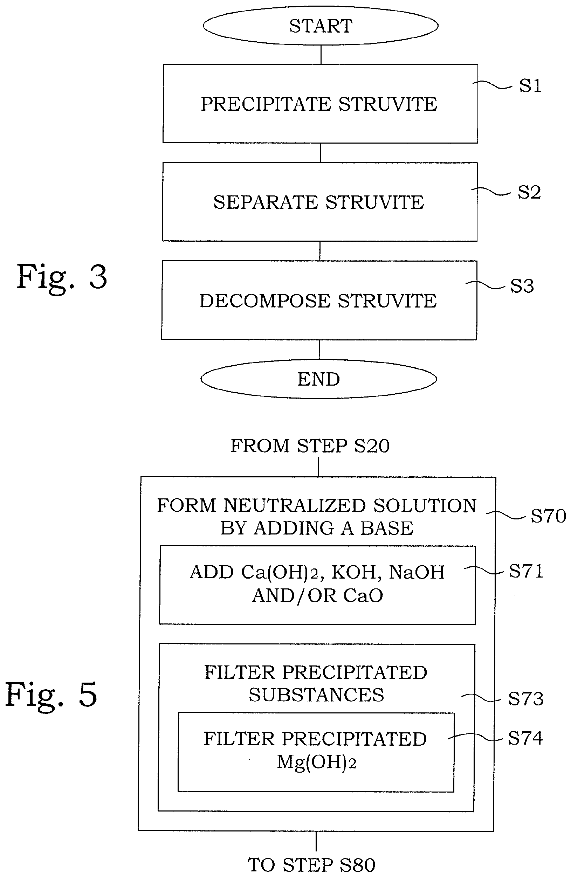

Figure 3 illustrates a flow diagram illustration steps of an embodiment of a method for recovering at least one of nitrogen, phosphorus and potassium from waste material. In step S1, struvite is precipitated from an initial liquid of waste material. This is achieved by adding a magnesium source to the initial liquid of waste material and adjusting a pH of the initial liquid of waste material to assume an alkaline pH. In step S2, the precipitated struvite is separated from the initial liquid of waste material. In step S3, the separated struvite is decomposed. This decomposing is preferably performed by a method according to what was described here above.

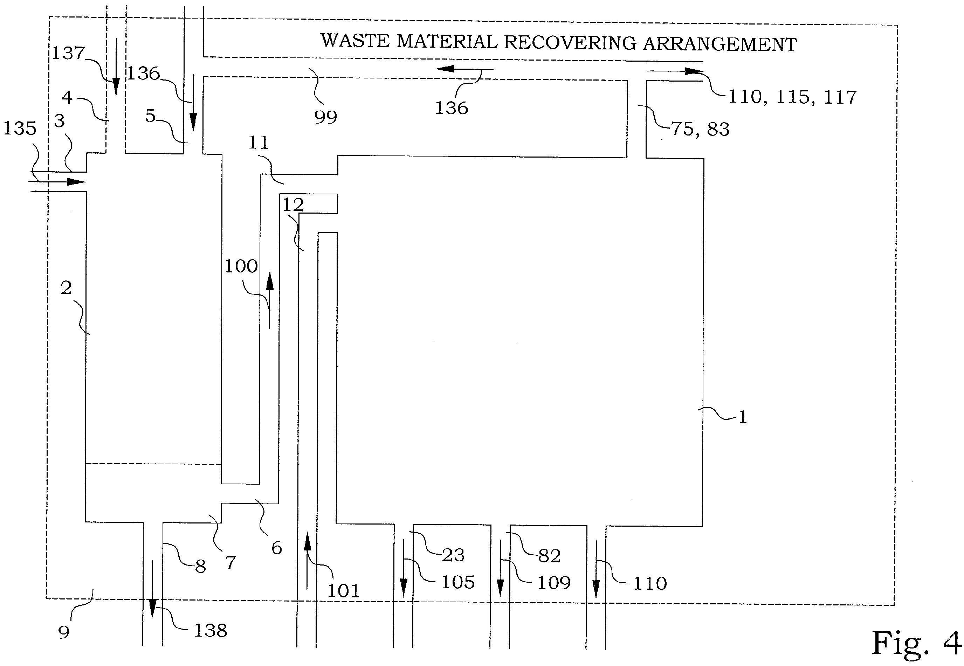

Figure 4 illustrates, in analogy, an embodiment of an arrangement 9 for recovering at least one of nitrogen, phosphorus and potassium from waste material. The arrangement 9 for recovering at least one of nitrogen, phosphorus and potassium from waste material comprises in this embodiment a waste material treatment tank 2 and an arrangement 1 for decomposing struvite. The arrangement 1 for decomposing struvite is preferably arranged according to any of the embodiments of arrangements for decomposing struvite presented in the present disclosure.

The waste material treatment tank 2 has an inlet 3 for an initial liquid 135 of waste material. The waste material treatment tank 2 also has an inlet 5 for a magnesium source 136. Depending on the type of magnesium source 136, it may be necessary also to have an optional inlet 4 for a base 137. The inlets 4 and 5 may of course be arranged as one common inlet. The waste material treatment tank 2 is configured for precipitating struvite 100 from the initial liquid 135 of waste material. This is achieved by adding the magnesium source 136 and adjusting a pH of the initial liquid 11 of waste material to an alkaline pH. This pH adjustment may be performed by the magnesium source, e.g. if magnesium hydroxide is used. For other magnesium sources, additional bases 137 may be added for adjusting the pH.

The waste material treatment tank 2 comprises a separator 7 configured for separating the precipitated struvite 100 from the initial liquid 135 of waste material. The waste material treatment tank 2 has an outlet 8 for liquid 138 of waste material separated from the precipitated struvite 100, and an outlet 6 for the precipitated struvite 100.

As will be discussed more in detail below, at least a part of the magnesium substances 75, 83 resulting from the decomposition of the struvite in the arrangement 1 for decomposing struvite, may be utilised as at least a part of the magnesium source 136 entered into the waste material treatment tank 2. A magnesium recirculation connection 99 is thereby provided from the arrangement 1 for decomposing struvite to the waste material treatment tank 2.

Independent on the method chosen for the separation of phosphorus from the struvite leach solution, the obtained phosphorus depleted solution is composed of mainly a mixture of magnesium chloride and ammonium chloride. If potassium struvite was present in the original struvite leach solution then the solution contains also dissolved potassium chloride. If calcium was present in the original struvite leach solution and the phosphorus was removed by solvent extraction the solution contains also dissolved calcium chloride.

One possibility to continue the process is to the remove ammonia. In cases where ammonia is requested to be removed from the above mentioned solution, a base is added to the solution to convert the ammonium ion into ammonia according to the following equation:

NH₄⁺ + OH⁻ → NH₃(g) + H₂O

Of course, many suitable bases can be used for that purpose. Examples include: CaO, Ca(OH)₂, MgO, Mg(OH)₂, KOH, and NaOH. Depending on the chemical used, the cation from the added base is converted to the dissolved chloride form such as: CaCl₂, MgCl₂, KCI, and NaCl.

Dissolved magnesium in the struvite leach solution can basically be recovered in three forms: a) magnesium hydroxide (Mg(OH)₂), b) magnesium chloride (MgCl₂) and c) magnesium carbonate (MgCO₃).

One alternative to recover magnesium is to precipitate it from the phosphorus depleted struvite leach solution by addition of lime (CaO or Ca(OH)₂). It has surprisingly been found that addition of lime to a phosphate depleted struvite leach solution enable the selective precipitation of magnesium hydroxide according to the following equation:

NH₄Cl + MgCl₂ + 6 H₂O + 1.5 Ca(OH)₂ → NH₃↑ + Mg(OH)₂↓ + 1.5 CaCl₂ + 7 H₂O

The presence of ammonia in solution does not interfere with the precipitation process, thus no foaming occurs. The reaction kinetics were found to be fast enabling complete magnesium removal from the solution with less than 25 minutes reaction time. The ammonia remaining in the calcium chloride solution is thereafter stripped from the solution according to state-of-the-art processes for ammonia separation from calcium chloride. For example, in the Solvay process, it is a common practice to separate very large amounts of ammonia from calcium chloride solutions to obtain a calcium chloride product of commercial quality.

Similar processes are also possible using potassium hydroxide and/or sodium hydroxide.

In Figure 5, an embodiment of the step S70 of forming a neutralized solution is illustrated in more detail. In this embodiment, the step S70 comprises step S71, in which calcium hydroxide, potassium hydroxide, sodium hydroxide and/or calcium oxide is added. The bases are added in such amount that they cause a precipitation of magnesium hydroxide. This means that the step S73 of filtering precipitated substances is relevant in this embodiment. Therefore, in this embodiment, step S73 comprises the step S74, in which the precipitated magnesium hydroxide is filtered and thereby removed from the remaining chloride salt solution. This remaining chloride salt solution then comprises calcium chloride, potassium chloride, and/or sodium chloride.

As mentioned above, in a particular embodiment, calcium is used in the base component, and therefore, the step of forming a neutralized solution comprises adding of calcium hydroxide and/or calcium oxide. This results in that the chloride salt solution comprises calcium chloride.

The separated magnesium hydroxide is washed from residual mother liquor. The washed magnesium hydroxide can thereafter be reacted with e.g. recovered phosphoric acid, as will be further discussed below, to produce di-magnesium phosphate.

It was found that the magnesium hydroxide could be separated in a filterable and washable form from highly concentrated calcium chloride solutions. However, the separation of magnesium hydroxide should preferably take place directly after the magnesium precipitation reaction is complete. Upon a too long aging time the magnesium hydroxide seems to change the crystal structure and convert to a form that is difficult to filter.

In another particular embodiment, potassium is used in the base component, and therefore, the step of forming a neutralized solution comprises adding of potassium hydroxide. This results in that the chloride salt solution comprises potassium chloride.

In yet another particular embodiment, sodium is used in the base component, and therefore, the step of forming a neutralized solution comprises adding of sodium hydroxide. This results in that the chloride salt solution comprises sodium chloride.

Figure 6 illustrates a schematic drawing of an embodiment of a neutralizer container 70. In this embodiment one or more of calcium hydroxide, potassium hydroxide, sodium hydroxide and calcium oxide is used as the base 107A to be added. To this end, the inlet 71 for the base 107A of the neutralizer container 70 is suitable for adding of at least one of these substances. The substances are preferably added in such an amount that it causes precipitation of magnesium hydroxide 115. This magnesium hydroxide 115 should be removed, and therefore, the neutralizer container 70 further comprises a filter 74 configured for filtering the precipitated magnesium hydroxide 115 from the chloride salt solution 108A. The remaining chloride salt solution 108A comprises at least one of calcium chloride, potassium chloride and sodium chloride. The magnesium hydroxide 115 is possible to extract through an output 75.

As will be discussed more, further below, this magnesium hydroxide 115 may be used as a magnesium source in precipitation of struvite from wastewater.

In an alternative or complement to the use of calcium, potassium or sodium, also magnesium may be used as a component in the added base.

In Figure 7, an embodiment of the step S70 of forming a neutralized solution is illustrated in more detail. In this embodiment, the step S70 comprises step S72, in which magnesium hydroxide and/or magnesium oxide is added. This results in that the formed chloride salt solution comprises magnesium chloride.

Figure 8 illustrates a schematic drawing of an embodiment of a neutralizer container 70. In this embodiment one or both of magnesium hydroxide and magnesium oxide is used as the base 107B to be added. To this end, the inlet 71 for the base 107B of the neutralizer container 70 is suitable for adding of at least one of these substances. The outlet 73 provides the chloride salt solution 108B comprising magnesium chloride.

After separation of ammonia, the magnesium is in this embodiment present in form of dissolved magnesium chloride. Impurities such as potassium chloride and sodium chloride can be separated by selective crystallization of the impurities upon concentration of the magnesium chloride solution by e.g. evaporation. This will be discussed in more detail further below dealing with recovery of potassium chloride. Smaller amounts of potassium chloride can be separated from magnesium chloride solution by addition of a phosphorus source and pH adjustment to precipitate potassium struvite (MgKPO₄·6H₂O) which can be separated by solid/liquid separation.

Mixtures of magnesium chloride and calcium chloride can be separated by removing magnesium hydroxide from calcium chloride through precipitation as will be discussed further below. Of course, mixtures of magnesium chloride and calcium chloride can also be used for effective phosphorus removal from wastewaters by phosphorus precipitation in form of a mixture of struvite and calcium phosphate which can thereafter be processed using the process according to the present invention.

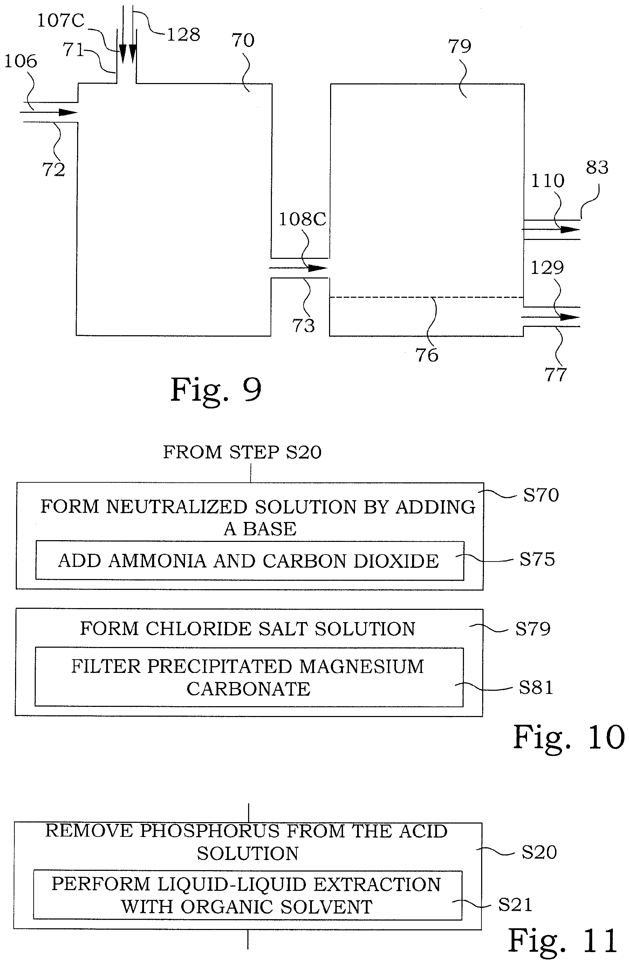

Figure 9 illustrates another embodiment, where ammonia is used as the base 107C for providing the neutralization of the phosphorus-depleted solution 106. The ammonia is added together with carbon dioxide 128 to treat the phosphorus-depleted solution 106. The addition can be made by contacting the phosphorus-depleted solution 106 with the two gases (CO₂ and NH₃) in an agitated reactor. Alternatively, the input materials can be feed into the reactor in liquid forms such as liquid ammonia, aqueous ammonia or carbonic acid. Additional alternative is to initially contact carbon dioxide with ammonia in the presence of water to form a solution of ammonium carbonate or ammonium bicarbonate that is fed into the reactor.

Upon addition of ammonium carbonate or ammonia and carbon dioxide to the reactor magnesium is precipitated in form of magnesium carbonate according to the following reaction:

NH₄Cl + MgCl₂ + 2 NH₃ + CO₂ + H₂O → MgCO₃↓ + 3 NH₄Cl.

The neutralized solution 108C is provided to the chloride salt solution handling section 79, The magnesium carbonate 129 is separated from the solution by filtration by a filter 76 and removed through an output 77. The remains of the neutralized solution form a concentrated solution of ammonium chloride which is exited through the outlet 83 as a chloride salt solution 110.

Figure 10 illustrates steps of an analogous method. Step S70 of forming a neutralized solution by adding a base comprises the step S75, in which ammonia and carbon dioxide is added. Step S79 furthermore comprises the step S81, in which precipitated carbonates are filtered, providing a solution of ammonium chloride.

Since the extracted phosphate ions described above are obtained in form of phosphoric acid, in a preferred embodiment, the recovered phosphoric acid is reacted with the separated magnesium carbonate to form dimagnesium phosphate according to the following reaction:

H₃PO₄ + MgCO₃ + 2 H₂O→ MgHPO₄·3H₂O + CO₂

The di-magnesium phosphate can be filtered from the solution, washed and used for struvite precipitation as described elsewhere in the present description. The obtained carbon dioxide can also be reused for precipitation of magnesium carbonate as described here above. The recovered carbon dioxide can be recycled in a gaseous form or in form of carbonic acid solution.

The above described process enables recovery of the ammonium in form of ammonium chloride. This solution can thereafter optionally be crystallized to form a solid ammonium chloride fertilizer product. This thus enables the incorporation of the chloride ions added with hydrochloric acid in a final product.

There are also several possibilities to further process the recovered ammonium chloride. One option is to add a base such as lime (Ca(OH)₂) to recover ammonia by stripping and to form a calcium chloride coproduct. Another alternative is to convert the recovered ammonium chloride into ammonium sulfate by reaction with concentrated sulfuric acid and to recycle gaseous hydrogen chloride by distillation for reuse for dissolution of struvite. An additional option is to add an alkali such as sodium hydroxide to the recovered ammonium chloride solution and to strip ammonia thus forming a sodium chloride solution. The sodium chloride solution can thereafter be treated with electrolysis/electrodialysis to recover both sodium hydroxide for reuse in ammonia stripping as well as hydrochloric acid for dissolution of struvite.

In cases calcium is present in the system, additional considerations may have to be made. One alternative is to use a selective dissolution of struvite. This can be obtained by addition of a smaller amount of hydrochloric acid enough only for the selective dissolution of struvite leaving e.g. calcium phosphates as a non-dissolved residue which can be separated by filtration. For example according to the following reaction:

CaHPO₄·2H₂O⁺NH₄MgPO₄·6H₂O + 3 HCl → H₃PO₄ + NH₄Cl + MgCl₂ + 6H₂O + CaHPO₄·2H₂O↓

In another alternative, calcium can be removed after the at least partial removal of the phosphorus. If the phosphorus is completely removed, the calcium is present in the remaining solution as calcium chloride.

By re-entering a limited amount of phosphorus, or by not removing all phosphorus in the first place, dicalcium phosphate may be precipitated when the pH is increased. First, added ammonia reacts with water to form ammonium ions:

2 NH₃+ 2 H₂O → 2 NH₄OH

The formed ammonium hydroxide increases the pH of the solution resulting in the precipitation of dissolved calcium as dicalcium phosphate according to the following reaction:

H₃PO₄ + H₂O + CaCl₂ + 2 NH₄OH → CaHPO₄·2H₂O↓ + 2 NH₄Cl.

In Figure 11, an embodiment of the step S20 of removing phosphorus from the acid solution is illustrated in more detail. In this embodiment, the step S20 of removing phosphorus from the acid solution comprises the step S21, in which a liquid-liquid extraction is performed by contacting the acid solution with an organic solvent. Thereby, the organic solvent becomes loaded with phosphate ions.

It has surprisingly been found that phosphoric acid can be selectively separated from a struvite leach solution by using extraction into an organic solvent according to the following equation:

H₃PO₄ + NH₄Cl + MgCl₂ + 6 H₂O → (extraction H₃PO₄) → NH₄Cl + MgCl₂ + 6 H₂O

Any organic solvent capable of removing phosphorus from aqueous solutions can be used in a liquid-liquid extraction section. The composition of the solvent should be selected to obtain a high loading capacity, sufficient selectivity and an effective operational extraction process.

Most suitable solvents are liquid organic molecules containing oxygen atoms (alcohols, esters, ethers, ketons, trialkyl phosphates, amides, etc.) which interact with phosphoric acid to form H-associations. During this mechanism, the extractant replaces part of the water molecules and solvates the phosphoric acid molecule in the organic phase. The binding of phosphoric acid is weak through H-association. Solvating extractants can be divided into two groups: a) solvents that have a reasonably constant distribution coefficient down to fairly low concentrations such as alcohols, tributyl phosphate, etc., and b) solvents which show very little extraction capacity for phosphoric acid below a specific threshold concentration, i.e., the distribution coefficient is very sharply concentration dependent such as for ethers, esters and selected ketones e.g. methyl isobutyl ketone. For the present application it is preferred to use mixtures of solvents that have a reasonably constant distribution coefficient down to fairly low concentrations such as tributyl phosphate which has a strong extraction power for phosphate from struvite leach solution even at very low concentrations mainly due to a salting out effect of the chloride salts on phosphorus extraction.

It has been experimentally shown by the present applicant that phosphoric acid is selectively extracted from a struvite leach solution. The co-extraction of magnesium chloride, ammonium chloride, potassium chloride, and calcium chloride is minimal.

The solvent extraction process is preferably a continuous process using any suitable liquid-liquid extraction equipment such mixer settlers, pulsed columns, agitated columns, non-agitated columns, inline mixers, centrifugal contactors, etc.

The organic solvent loaded with phosphoric acid is usually scrubbed with a small amount of water or phosphoric acid to remove co-extracted chloride salts.

Thereafter the solvent is stripped with a suitable solution. Any suitable stripping solution can be used for this purpose such as: water, mono-ammonium phosphate, aqueous ammonia, sodium carbonate, sodium hydroxide, etc. Some attractive alternatives will be discussed more here below.

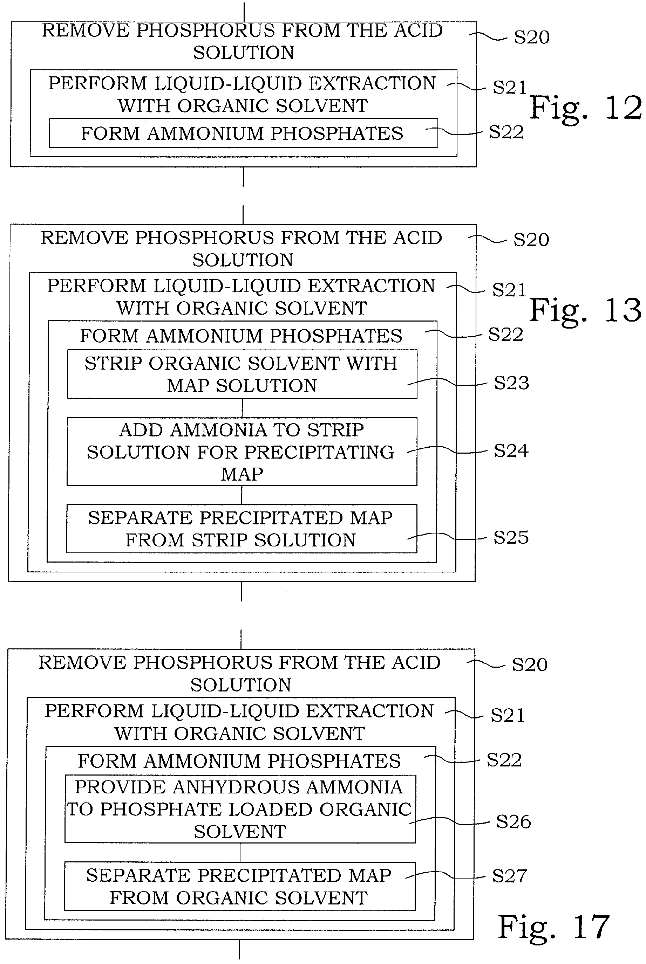

In Figure 12, an embodiment of the step S20 of removing phosphorus from the acid solution is illustrated in more detail. In this embodiment, the step S21 of removing phosphorus from the acid solution further comprises step S22, in which ammonium phosphates are formed by provision of ammonia or solutions of ammonium phosphates to phosphate ions of the organic solvent loaded with phosphate ions.

In Figure 13, an embodiment of the step S20 of removing phosphorus from the acid solution is illustrated in more detail. In this embodiment, the step S22 of forming ammonium phosphates from the acid solution comprises the step S23, in which the organic solvent loaded with phosphate ions is stripped with a strip solution of a mono-ammonium phosphate solution. In step S24, ammonia is added to the phosphate loaded strip solution. This addition causes precipitation of mono-ammonium phosphate. In step S25, the precipitated mono-ammonium phosphate is separated from the strip solution.

The step S20 of the embodiment illustrated in Fig. 13 follows, as such, the teachings in the published International patent publication WO 2013/191639 A1. Details of the application of such a part method can easily be understood by anyone skilled in the art in the light of the above mentioned publication and are therefore not repeated here. Stripping the organic solvent with a solution of mono-ammonium phosphate is performed in order to recover solid ammonium phosphates as a product.

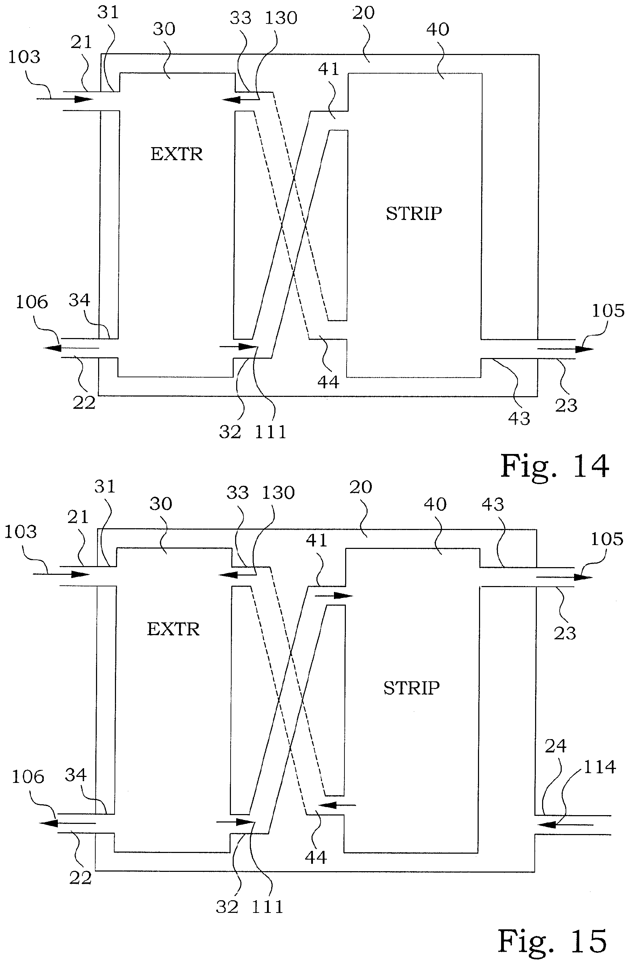

In Figure 14, an embodiment of the phosphorus removing section 20 is illustrated in more detail. In this embodiment, the phosphorus removing section 20 comprises a liquid-liquid extraction section 30 and a strip section 40. The liquid-liquid extraction section 30 has an inlet 31 for said acid solution 103 and an inlet 33 for an organic solvent 130. The liquid-liquid extraction section 30 is configured for contacting the acid solution 103 with the organic solvent 130, whereby the organic solvent becomes loaded with phosphate ions 111 The liquid-liquid extraction section has an outlet 32 for the organic solvent loaded with phosphate ions 111, and an outlet 34 for the phosphorus-depleted solution 106.

The strip section 40 has an inlet 41 for the organic solvent loaded with phosphate ions 111 connected to the outlet 32 for the organic solvent loaded with phosphate ions 11 of the liquid-liquid extraction section 30. The strip section 40 is configured for stripping the organic solvent of its phosphate ions. Therefore, the strip section 40 has an outlet 44 for the organic solvent depleted of phosphate ions 130. The outlet 44 for the organic solvent depleted of phosphate ions 130 is connected to the inlet 33 for an organic solvent 130 of the liquid-liquid extraction section 30.

In Figure 15, an embodiment of a phosphorus removing section 20 is illustrated. In this embodiment, the phosphorus removing section 20 has an inlet 24 for ammonia or solutions of ammonium phosphates 114. The phosphorus removing section 20 is configured for forming ammonium phosphates by provision of the ammonia or solutions of ammonium phosphates 114 to phosphate ions extracted by the organic solvent 111.

The ammonia removal section 80 (Figure 2) is, as described above, configured for stripping of ammonia 109 from the neutralized solution 108. This ammonia is in one embodiment utilized in the phosphorus removing section 20. To this end, the outlet 82 for the stripped ammonia 109 is connected to the inlet 24 for ammonia or solutions of ammonium phosphates 114 (Figure 15).

A similar reutilization of stripped ammonia can be implemented in many other of the embodiments, presented further below.

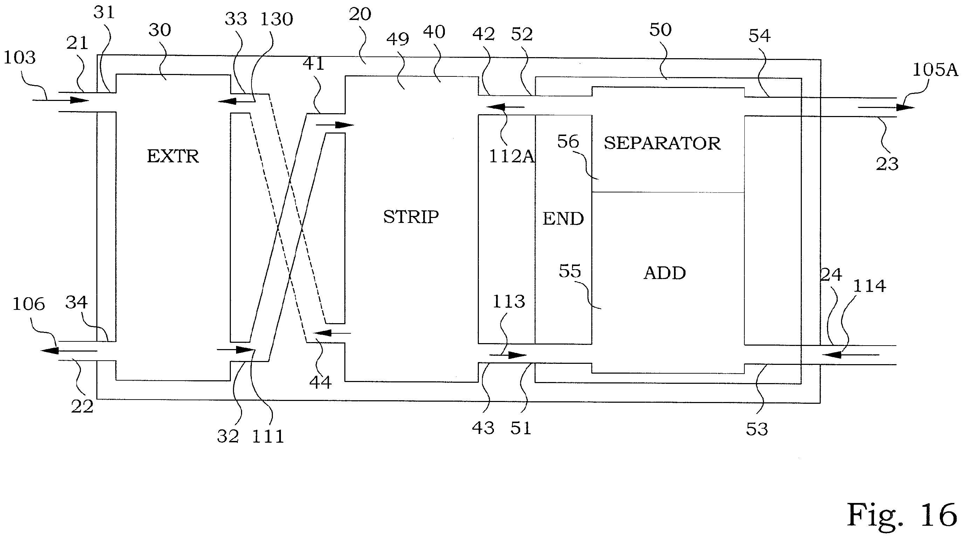

In Figure 16, an embodiment of a phosphorus removing section based on teachings found in WO 2013/191639 A1 is illustrated. In this embodiment, the strip section 40 has an inlet 42 for a strip solution. The strip solution is in this embodiment a mono-ammonium phosphate solution 112A. The strip section 40 is configured for stripping the organic solvent 111 of its phosphate ions whereby the strip solution becomes loaded with phosphate ions 113. Therefore, the strip section 40 has an outlet 43 for the strip solution loaded with phosphate ions 113.

The phosphorus removing section 20 further comprises an end treatment section 50 arranged for adding ammonia from the inlet 24 for ammonia or solutions of ammonium phosphates 114 to the phosphate loaded strip solution 113 in an adding vessel 55. This causes precipitation of mono-ammonium phosphate. The end treatment section 50 further comprises a separator 56 configured for separating the precipitated mono-ammonium phosphate from the strip solution. The separator 50 has an outlet 52 for the strip solution 112A after separation of the precipitated mono-ammonium phosphate connected to the inlet 42 for the strip solution 112A of the strip section 40. The separator 50 also has an outlet 54 for the precipitated mono-ammonium phosphate 105A.

Suitable details for the arrangement can be found in the published international patent application WO 2013/191639 A1.

In a particular embodiment based on Figures 1, 2, 7, 8, 13 and 16, struvite is dissolved by HCl in a dissolver container 10. The dissolution follows, as mentioned above, the process:

NH₄MgPO₄·6H₂O + 3 HCl → H₃PO₄ + NH₄Cl + MgCl₂ + 6 H₂0.

After a pre-treatment, involving removal of non-dissolved solids, and removal of organic material by activated carbon and chemical oxidation, the acid solution is brought to the phosphorus removing section 20. Phosphorus ions are extracted, in form of phosphate ions, according to:

H₃PO₄ + NH₄Cl + MgCl₂ + 6 H₂0 → (Extraction of H₃PO₄) → NH₄Cl + MgCl₂ + 6 H₂0.

According to the teachings of WO 2013/191639 A1, the solvent is stripped with a MAP solution. Ammonia is adsorbed in a part of the MAP solution to form a DAP solution. The strip solution is mixed with the DAP solution to form MAP crystals in a saturated MAP solution.

Ammonia, preferably obtained from a later stage in the process, is thus used after the extraction of phosphorus, giving an output product of mono-ammonium phosphate, according to the following process:

H₃PO₄ + NH₃ → NH₄H₂PO₄.

In the neutralizer container 70, magnesium hydroxide is added. Caused by this neutralization, the ammonia is formed from the ammonium chloride. The ammonia is stripped and reused in the phosphorus removing stage, leaving a solution of magnesium chloride. The process can be described chemically as:

NH₄Cl + MgCl₂ + 6 H₂0 + 0.5 Mg(OH)₂ → (Stripping of NH₃) → 1.5 MgCl₂ + 7 H₂0.

A total process can chemically be described as:

NH₄MgPO₄·6H₂O + 3 HCl + 0.5 Mg(OH)₂ -> NH₄H₂PO₄ + 1.5 MgCl₂ + 7 H₂0.

Mono-ammonium phosphate (MAP) is a well-known fertilizer with very good dissolution properties. Since the magnesium is recovered and separated as magnesium chloride, which as such is a valuable product, there is no risk for accumulation of magnesium in arable land due to the fertilizers.

In an alternative, the magnesium neutralization could be achieved by addition of MgO, which upon reaction with water forms Mg(OH)₂.

In another particular embodiment based on Figures 1, 2, 5, 6, 13 and 16, struvite is dissolved by HCl (100%) in a dissolver container 10. The dissolution follows the same process as shown above. After a pre-treatment, the acid solution is brought to the phosphorus removing section 20. Phosphorus ions are extracted in the same way as presented above.

In the neutralizer container 70, calcium oxide is added. The calcium oxide reacts with water, forming calcium hydroxide. Caused by the neutralization from the calcium hydroxide, magnesium hydroxide is precipitated and separated. The process is:

NH₄Cl + MgCl₂ + 6 H₂0 + 1.5 CaO → NH₄Cl + MgCl₂ + 4.5 H₂0 + 1.5 Ca(OH)₂ → NH₃ + Mg(OH)₂↓ + 4.5 H₂0 + 1.5 CaCl₂ → (Separation of Mg(OH)₂) → NH₃ + 4.5 H₂0 + 1.5 CaCl₂.

Ammonia is formed from the ammonium chloride. The ammonia is stripped and reused in the phosphorus removing stage, as described before, leaving a solution of calcium chloride. The process can be described chemically as:

NH₃ + 4.5 H₂0 + 1.5 CaCl₂ → (Stripping of NH₃) → 1.5 CaCl₂ + 4.5 H₂0.

A total process can chemically be described as:

NH₄MgPO₄·6H₂O + 3 HCl + 1.5 CaO → NH₄H₂PO₄ + Mg(OH)₂ + 1.5 CaCl₂ + 4.5 H₂0.

As above, mono-ammonium phosphate is achieved. In this embodiment, magnesium is recovered and separated as magnesium hydroxide, which e.g. can be utilized e.g. as a magnesium source in precipitation of struvite from waste water flows. Burnt lime is a relatively inexpensive substance, and gives rise to a valuable product in the form of calcium chloride.

In an alternative, the calcium neutralization could be achieved by direct addition of Ca(OH)₂.

Alternatives on this embodiment can be to use other forms of bases in the neutralization step. KOH will result in the end production of KCI, and NaOH will result in end production of NaCl. Both these end products are valuable products.

The performance of the liquid-liquid extraction can also be performed in other ways. Figure 17 illustrates an embodiment of the step S20 of removing phosphorus from the acid solution. In this embodiment, the step S22 of forming ammonium phosphates from the acid solution comprises providing S26 of anhydrous ammonia to the organic solvent loaded with phosphate ions. This provision causes a precipitation of ammonium phosphates. In step S27, the precipitated ammonium phosphates are separating from the organic solvent.

A corresponding embodiment of a phosphorus removing section 20 is illustrated in Figure 18. The strip section 40 comprises an inlet 47 of anhydrous ammonia 114B connected to the inlet 24 for ammonia or solutions of ammonium phosphates. Upon contacting of the anhydrous ammonia 114B with the organic solvent loaded with phosphate ions 111 precipitation of ammonium phosphates is caused. The strip section 40 further comprising a separator 45 configured for separating the precipitated ammonium phosphate 105A from the organic solvent 111. The strip section 40 has an outlet 43 for the precipitated mono-ammonium phosphate 105A. Optionally, a washer 46 may be provided, arranged for cleaning the precipitated ammonium phosphate.

The ammonium production and separation follows basically the principles presented in the published international patent application WO 2010/138045 A1. Further details of possible and preferred processes are easily deduced from this document.

This embodiment can also be utilized for in an analogy with the detailed embodiments described above. The same total chemical reactions will occur.

An advantageous feature of the present technology is that it enables production of ammonium phosphates by using the ammonia originating from the struvite molecule itself. In this process, the gaseous ammonia recovered from struvite, discussed further below, is used as the stripping chemical for reacting with the phosphoric acid from the organic solvent.

Figure 19 illustrates another embodiment of the step S20 of removing phosphorus from the acid solution. In this embodiment, the step S22 of forming ammonium phosphates from the acid solution comprises stripping S28 the organic solvent loaded with phosphate ions with aqueous ammonia. This stripping results in the formation of a solution of ammonium phosphates.

A corresponding embodiment of a phosphorus removing section 20 is illustrated in Figure 20. The strip section 40 has an inlet 49 for a strip solution connected to the inlet 24 for ammonia or solutions of ammonium phosphates. The strip solution is in this embodiment an aqueous ammonia 114C. The strip section 40 is configured for stripping the organic solvent 111 of its phosphate ions whereby the strip solution becomes loaded with phosphate ions forming a solution of ammonium phosphates 104B. The strip section 40 therefore has an output 48 for the solution of ammonium phosphates 105B.

This embodiment can also be utilized for in an analogy with the detailed embodiments described above. The same total chemical reactions will occur.

Other alternatives for the removal of phosphorus ions by liquid-liquid extraction may not be connected to the direct formation of ammonium phosphates. Figure 21 illustrates an embodiment of the step S20 of removing phosphorus from the acid solution. In this embodiment, the step S21 of performing a liquid-liquid extraction with an organic solvent comprises step S29, in which the organic solvent loaded with phosphate ions is stripped with water, forming a solution of phosphoric acid. The output from the step S20 of removing phosphorus from the acid solution is thus a solution of phosphoric acid.

In a further embodiment of the step S20 of removing phosphorus from the acid solution, illustrated in Figure 20. The method comprises the further step S30 of reacting the solution of phosphoric acid with ammonia. Such a reaction will lead to the formation of a solution of ammonium phosphates.

In Figure 23, a schematic illustration of embodiments of parts of an arrangement for decomposing struvite is illustrated. In this embodiment, the strip section 40 has an inlet 42 for a strip solution. In this embodiment, the strip solution is water. The strip section 40 is configured for stripping the organic solvent of its phosphate ions. The strip solution thereby becomes loaded with phosphate ions, thus forming a solution of phosphoric acid. The strip section 20 has an outlet 43 for the solution of phosphoric acid 105C.

In a further embodiment, the arrangement for decomposing struvite further comprises a reactor 60 having an inlet 61 for the solution of phosphoric acid 105C. The reactor 60 has also an inlet 62 for ammonia 109. The reactor 60 is configured for causing a reaction of the solution of phosphoric acid 105C with the ammonia 109, forming ammonium phosphates 105A. The reactor 60 has an outlet 64 for the ammonium phosphates 105A.

Stripping the organic solvent with water thus results in the production of phosphoric acid. The concentration of phosphoric acid can be increased by stripping with a small amount of water in several contact stages according to processes, as such known to the skilled in the art.

The phosphoric acid from the strip section can also be taken care of in alternative ways. Figure 24 illustrates steps of an embodiment of a part of a method for struvite decomposition. Step S20 is similar is in Figure 21. However, the produced phosphoric acid is in step S32 reacted with magnesium hydroxide. This results in the forming of magnesium phosphates.

In a preferred embodiment, the used magnesium hydroxide is recovered from magnesium hydroxide produced in the neutralization step.

There are three forms of magnesium phosphates; monomagnesium phosphate with a Mg:P ration of 1:2, dimagnesium phosphate with a Mg:P ratio of 1:1 and trimagnesium phosphate with a Mg:P ratio of 3:2.

Depending on the operational conditions during the reaction of phosphoric acid and magnesium hydroxide, either, both or all of these may be produced.

An additional unique feature of one embodiment of the present technology is thus that it enables production of magnesium phosphates by reacting recovered magnesium hydroxide originating from the struvite molecule itself with phosphoric acid obtained from stripping the organic solvent with water.

In general there are three possible forms of magnesium phosphates: mono-magnesium phosphate (Mg(H₂PO₄)₂), di-magnesium phosphate (MgHPO₄), and tri-magnesium phosphate (Mg₃(PO₄)₂). All magnesium phosphate can be formed with varying amounts of crystal water. For example the mono-magnesium phosphate can generally have from 0 to 4 crystal water molecules. Examples for common mono-magnesium phosphate includes the following compounds (according to molecular weight): 218.3 (Anhydrous), 254.3 (Dihydrate), and 290.3 (Tetrahydrate). Mono-magnesium phosphate has a considerable solubility in water. For example, usually a phosphoric acid concentration of more than 10 % by weight can be kept in solution in form of dissolved mono-magnesium phosphate. In the method according to the present embodiment it is, of course, possible to use any form of magnesium phosphates in a solid or a liquid form. Production of mono-magnesium phosphates is generally obtained by neutralization of phosphoric acid with magnesium hydroxide in the right mole ratio.

Di-magnesium phosphate is usually produced as the tri-hydrate MgHPO₄·3H₂O, but other forms can possibly exist in different amorphous crystalline products. A common way to produce di-magnesium phosphate is by neutralization of phosphoric acid with magnesium hydroxide in the right mole ratio. Tri-magnesium phosphate is usually produced in two forms: tri-magnesium phosphate octahydrate (Mg₃(PO₄)₂·8H₂O) and a form comprising 22 crystal water molecules (Mg₃(PO₄)₂·22H₂O). Methods for production of tri-magnesium phosphate octahydrate includes production of a mono-magnesium phosphate solution which is thereafter reacted with a magnesium hydroxide slurry at a controlled pH and temperature according to e.g. US patent no. 4,411,876.

Di-magnesium phosphate has been shown to be an effective reagent for struvite precipitation. By stripping the loaded organic solvent with water a phosphoric acid strip solution is obtained. Reacting the phosphoric acid with recovered magnesium hydroxide at a mole ratio of 1:1 (Mg:P) results in the precipitation of di-magnesium phosphate tri-hydrate (MgHPO₄·3H₂O). The precipitated di-magnesium phosphate is thereafter separated from the solution by any suitable solid/liquid separation technique. The solution after separation of di-magnesium phosphate contains mainly water with only trace amounts of dissolved magnesium and phosphate. This water solution can be reused again for stripping the loaded organic solvent. In such a way an internal recirculation of water is obtained which reduce the operational cost and is resource efficient.

After extraction of phosphoric acid from the initial struvite leach solution, a raffinate solution composed of magnesium chloride and ammonium chloride is formed. If potassium struvite was originally present, then the potassium is in form of dissolved potassium chloride (KCI) in the raffinate solution. If dissolved calcium ions were originally present in the struvite leach solution, they are obtained in the raffinate in form of dissolved calcium chloride. By having sufficient contact stages complete extraction of phosphoric acid can be obtained. Any residual phosphorus in the raffinate can be removed by neutralization of the raffinate solution causing the precipitation of the residual phosphorus in form of calcium phosphate or magnesium phosphate which can be removed by solid/liquid separation and be recycled back to the struvite dissolution reactor.

Returning to Figure 23, in one embodiment of an arrangement for decomposing struvite the reactor 60 has an inlet 63 for magnesium hydroxide 115. Preferably, this magnesium hydroxide is produced within the arrangement. The reactor 60 is configured for causing a reaction of the solution of phosphoric acid 105C with the magnesium hydroxide 115, forming magnesium phosphates 117. The reactor 60 has an outlet 65 for the magnesium phosphates 117. In one further embodiment, the reactor 60 is configured for causing forming of dimagnesium phosphate. In another further embodiment, the reactor 60 is configured for causing forming of trimagnesium phosphate.

The so produced magnesium phosphates can further be utilized for precipitating struvite from waste water streams.

The ammonia removal capacity of different magnesium phosphate compounds was assessed experimentally by several researches (e.g. Sugiyama et al. 2005). In general, three main forms of magnesium phosphate can be formed by decomposition of struvite: di-magnesium phosphate (newberyite, MgHPO₄·3H₂O), tri-magnesium phosphate (bobierrite, Mg₃(PO₄)₂·8H₂O) and magnesium pyrophosphate (Mg₂P₂O₇). The order of aqueous ammonium removal efficiency for the above mentioned magnesium phosphates was found to be MgHPO₄ > Mg₃(PO₄)₂ > Mg₂P₂O₇, which is identical to the solubility of these magnesium phosphates in water. Magnesium pyrophosphate has a very low ammonium removal capacity.

Di-magnesium phosphate was found to be very effective for removal of aqueous ammonia. For example, Wilson 2013 studied the effectiveness of synthetic di-magnesium phosphate as a reagent for aqueous ammonia removal from solution. Addition of di-magnesium phosphate at a molar ratio Mg:N:P of 1:1:1, caused 90% ammonia removal efficiency when the pH, temperature and reaction time varied from 7-8, 10°C-25°C and 1-3 hours, respectively.

In this way, struvite can be extracted from waste water, bringing nitrogen in the form of ammonium with it. The ammonium can by the struvite decomposition process be recovered, either as ammonia or as an ammonium salt together with different acids.

If trimagnesium phosphate is used for precipitation of struvite, such a process will also pick up further phosphates from the waste water stream. In this way, struvite can be extracted from waste water, bringing additional phosphorus in the form of phosphate ions with it. The extra phosphate can by the struvite decomposition process be recovered, e.g. as ammonium phosphate products.

In yet another particular embodiment based on Figures 1-6, 23 and 24, dimagnesium phosphate is allowed to react with ammonium hydroxide in a waste water stream. Struvite is precipitated according to:

NH₄OH + MgHPO₄ + 5 H₂0 → NH₄MgPO₄·6H₂O↓.

The struvite is dissolved by HCl in a dissolver container 10. The dissolution follows the same process as shown above. After a pre-treatment, the acid solution is brought to the phosphorus removing section 20. Phosphorus ions are extracted as a solution of phosphoric acid.

The phosphoric acid is allowed to react with magnesium hydroxide to form dimagnesium phosphate according to:

H₃PO₄ + Mg(OH)₂ → MgHPO₄ + 2 H₂O.

In the neutralizer container 70, calcium hydroxide is added. Caused by the neutralization from the calcium hydroxide, magnesium hydroxide is precipitated and separated. The process is:

NH₄Cl + MgCl₂ + 6 H₂0 + 1.5 Ca(OH)₂ → NH₃ + Mg(OH)₂↓ + 6 H₂0 + 1.5 CaCl₂ → (Separation of Mg(OH)₂) → NH₃ + 6 H₂0 + 1.5 CaCl₂.

Ammonia is formed from the ammonium chloride. The ammonia is stripped as described before, leaving a solution of calcium chloride. The process can be described chemically as:

NH₃ + 6 H₂0 + 1.5 CaCl₂ → (Stripping of NH₃) → 1.5 CaCl₂ + 6 H₂0.

A total process can chemically be described as:

MgHPO₄ + NH₄OH + 3 HCl + 1.5 CaO + 5 H₂0 → MgHPO₄ + NH₃ + 1.5 CaCl₂ + 7.5 H₂0.

As can be seen, the magnesium phosphate is not consumed, while nitrogen is extracted from the waste water and is recovered as ammonia.

In an alternative, trimagnesium phosphate can be utilized in an analogous manner. The original precipitation of struvite then becomes:

NH₄OH + 1/3 Mg₃(PO₄)₂ + 1/3 H₃PO₄ + 5 H₂0 → NH₄MgPO₄·6H₂O↓.

Some phosphate ions can be used for forming of trimagnesium phosphate according to:

2/3 H₃PO₄ + Mg(OH)₂ → 1/3 Mg₃(PO₄)₂ + H₂0.

The remaining phosphate ions may react with ammonia to form monoammonium phosphate:

1/3 H₃PO₄ + 1/3 NH₃ → 1/3 NH₄H₂PO₄.

The total reaction then becomes:

1/3 Mg₃(PO₄)₂ + NH₄OH + 1/3 H₃PO₄ + 3 HCl + 1.5 CaO + 5 H₂0 → 1/3 Mg₃(PO₄)₂ + 1/3 NH₄H₂PO₄ + 2/3 NH₃ + 1.5 CaCl₂ + 7.5 H₂0.

Also here it can be seen that the magnesium phosphate is not consumed, while nitrogen and phosphate is extracted from the waste water and is recovered as ammonia and mono-ammonium phosphate.

If the ratio of N:P in the waste water stream is known, the ratio between dimagnesium phosphate and trimagnesium phosphate, i.e. the ratio Mg:P, can be controlled to give an optimum extraction of both N and P, down to a N:P ratio of 3.

So far, only liquid-liquid extraction based phosphate removal methods have been discussed. However, there are other alternatives. Precipitation of phosphate salts is one possible way.

Figure 25 illustrates an embodiment of the step S20 of removing phosphorus from the acid solution. In this embodiment, the step S20 of removing phosphorus from the acid solution comprises the step S40, in which a precipitation of phosphate salts from the acid solution is caused.

According to one embodiment of the present technology, it has surprisingly been shown that phosphate can selectively be precipitated from the struvite leach solution by addition of lime. The phosphate is precipitated in form of di-calcium phosphate which can be use as feed phosphate supplement or as a raw material for production of phosphorus fertilizers.

Thus, in one embodiment, the step S40 of causing a precipitation of phosphate salts comprises the step S41, in which a calcium-containing substance is added. The calcium-containing substance is selected to be calcium carbonate, calcium oxide, and/or calcium hydroxide. The addition of the calcium-containing substance causes a precipitation of dicalcium phosphate. The step S40 of causing a precipitation of phosphate salts further comprises the step S42, in which the precipitated dicalcium phosphate is filtrated from the remaining solution of the originally acid solution.

In principle, limestone (CaCO₃), calcium oxide (CaO), or calcium hydroxide (Ca(OH)₂) can be used for this purpose according to the following equation (calcium oxide convert to the hydroxide form upon reaction with water):

H₃PO₄ + NH₄Cl + MgCl₂ + 6 H₂O + Ca(OH)₂ → CaHPO₄·2H₂O↓ + MgCl₂ + NH₄Cl + 6 H₂O

Figure 26 illustrates schematically an embodiment of a phosphorus removing section 20. The phosphorus removing section 20 comprises a precipitation reactor 35 having an inlet 31 for the acid solution 103 and an inlet 37 for a precipitator substance. The precipitation reactor 35 is configured for causing a precipitation of phosphate salts from the acid solution 103. The precipitation reactor 35 has an outlet 38 for the precipitated phosphate salts, and an outlet 34 for the phosphorus-depleted solution 106.

In one embodiment, the inlet 37 for a precipitator substance is arranged for adding a calcium-containing substance 116 selected from calcium carbonate, calcium oxide, and calcium hydroxide. The calcium-containing substance 116 causes a precipitation of dicalcium phosphate 131. The precipitation reactor 35 further comprises a filter 36 arranged for filtrating the precipitated dicalcium phosphate 131 from the acid solution. The outlet 38 for the precipitated phosphate salts being an output for the precipitated dicalcium phosphate 131.

The precipitated di-calcium phosphate is thereafter separated by any suitable solid/liquid separation technique such as filtration, etc. according to the following equation:

CaHPO₄·2H₂O↓ + MgCl₂ + NH₄Cl + 6 H₂O → (S/L separation of DCP) → MgCl₂ + NH₄Cl + 6 H₂O

After separation of precipitated di-calcium phosphate a solution composed of magnesium chloride and ammonium chloride is formed. If potassium struvite is present, than the potassium is in form of dissolved potassium chloride (KCI) in the solution. If dissolved calcium ions were originally present in the struvite leach solution, they are incorporated into the di-calcium phosphate product.

With reference to Figure 25, in one further embodiment, the step S41 comprises adding of calcium carbonate, which causes a precipitation of dicalcium phosphate and at the same time an emission of carbon dioxide gas.

If limestone is used, a considerable amount of carbon dioxide gas is generated during the dissolution process. According to the present invention, the carbon dioxide can therefore be recovered and reacted with the ammonia recovered from the struvite molecule itself to produce e.g. ammonium bicarbonate (recovery of ammonia is discussed further in the text). Production of ammonium bicarbonate by reacting carbon dioxide with anhydrous ammonia is a process known to the skilled in the art.

H₃PO₄ + NH₄Cl + MgCl₂ + 6 H₂O + CaCO₃ → CaHPO₄·2H₂O↓ + MgCl₂ + NH₄Cl + CO₂↑ + 5 H₂O

Figure 27 illustrates a further embodiment of a method for decomposing struvite. In step S90, the stripped ammonia and the emitted carbon dioxide are contacted in the presence of water, forming ammonium bicarbonate.

With reference to Figure 26, in one further embodiment, the inlet 37 for a precipitator substance is arranged for adding calcium carbonate, causing a precipitation of dicalcium phosphate 131 and emission of carbon dioxide 118. The precipitation reactor 35 further comprises an outlet 39 for the emitted carbon dioxide 118.

Figure 28 illustrates a further embodiment of an arrangement for decomposing struvite. The outlet 39 from the phosphorus removing section 20 and the outlet 82 from the ammonia removal section 80 are connected to a respective inlets 91, 92 of a reaction section 90 for contacting the stripped ammonia 1090 and the emitted carbon dioxide 118 in presence of water, forming ammonium bicarbonate.

In a particular embodiment based on Figures 1-4, 7-8, 26-28, struvite is dissolved by HCl in a dissolver container 10. The dissolution follows the same process as shown above. After a pre-treatment, the acid solution is brought to the phosphorus removing section 20. Calcium carbonate is added, causing a precipitation of DCP and emission of carbon dioxide, according to:

H₃PO₄ + NH₄Cl + MgCl₂ + 6 H₂0 + CaCO₃ → CaHPO4·2H20↓ + NH₄Cl + MgCl₂ + CO₂↑ + 5 H₂0 → (Stripping of CO₂ and Separation of DCP) → NH₄Cl + MgCl₂ + 5 H₂0

In the neutralizer container 70, magnesium hydroxide is added. Caused by this neutralization, the ammonia is formed from the ammonium chloride. The process can be described chemically as:

NH₄Cl + MgCl₂ + 5 H₂0 + 0.5 Mg(OH)₂ → (Stripping of NH₃) → 1.5 MgCl₂ + 6 H₂0.

The ammonia is stripped and contacted with the emitted carbon dioxide in presence of water. The process can be described chemically as:

NH₃ + CO₂ + H₂0 → NH₄HCO₃.

A total process can chemically be described as:

NH₄MgPO₄·6H₂O + 3 HCl + CaCO₃ + 0.5 Mg(OH)₂ → CaHPO₄·2H₂O + 1.5 MgCl₂ + NH₄HCO₃ + 5 H₂0.

As can be seen, the phosphate is recovered as DCP, which is useful e.g. as animal feed. DCP is also a common raw material for other phosphorous products. The magnesium is provided as magnesium chloride and the ammonia is recovered as ammonium bicarbonate.

In an alternative embodiment, in the neutralizer container 70, calcium hydroxide is added. Caused by the neutralization from the calcium hydroxide, magnesium hydroxide is precipitated and separated, and the ammonia is stripped. The process is:

NH₄Cl + MgCl₂ + 5 H₂0 + 1.5 Ca(OH)₂ → NH₃ + Mg(OH)₂↓ + 5 H₂0 + 1.5 CaCl₂ → (Separation of Mg(OH)₂) → NH₃ + 5 H₂0 + 1.5 CaCl₂ → (Stripping of NH₃) → 1.5 CaCl₂ + 5 H₂0.

The ammonia is contacted with the emitted carbon dioxide in presence of water.

A total process can chemically be described as:

NH₄MgPO₄·6H₂O + 3 HCl + CaCO₃ + 1.5 Ca(OH)₂ → CaHPO₄·2H₂O + Mg(OH)₂ + 1.5 CaCl₂ + NH₄HCO₃ + 4 H₂0.

As can be seen, the magnesium is provided as magnesium hydroxide and the ammonia is recovered as ammonium bicarbonate. Additional calcium chloride is also obtained.

In addition to the precipitation of phosphorus from the struvite leach solution in the form of di-calcium phosphate by addition of lime, it is also possible to precipitate phosphorus in other forms. The requirement is, of course, that the precipitate should have considerably lower solubility compared to the solubility of magnesium phosphates at the given pH value in order to obtain a selective precipitation. Examples of possible forms for selective precipitation of phosphorus include metal phosphates such as iron phosphate and aluminum phosphate. Such precipitates can thereafter be treated in an additional step for the separation of phosphorus from the metal and to recycle the metal for subsequent phosphorus precipitation.

Returning to Figure 25, in another embodiment, the step S40 of causing a precipitation of phosphate salts comprises the step S41 of adding a substance causing a precipitation. In this embodiment, the substance causing a precipitation comprising a base and at least one of Fe and Al. The caused precipitation is a precipitation of at least one of iron phosphate and aluminium phosphate. In step S42, the precipitated at least one of iron phosphate and aluminium phosphate is filtrated from the acid solution.

If the Fe alternative is selected, i.e. the adding of a substance comprising a base and Fe, a precipitation of iron phosphate is caused. The filtrating S42 thereby becomes a filtrating of the precipitated iron phosphate.

The Fe and the base can be provided in different ways. One alternative is to use iron hydroxide. Another alternative is to use iron chloride as iron source and calcium hydroxide, potassium hydroxide, and/or sodium hydroxide as the base source.

The precipitated iron phosphate can after separation be further processed. In one embodiment, the precipitated iron phosphate can be dissolved, typically in HCl. A liquid-liquid extraction may be used for separating the iron phosphate into phosphoric acid and iron chloride.

In one further embodiment, the separated phosphoric acid can be further reacted with ammonia, forming ammonium phosphates. This ammonia is preferably achieved by the above mentioned ammonia stripping.

In another further embodiment, the separated phosphoric acid is reacted with magnesium hydroxide, forming magnesium phosphates. If the neutralizing step gives rise to a precipitation of magnesium hydroxide, this can by advantage be reused for this purpose.

Furthermore, the iron chloride separated in the above mentioned step of performing a liquid-liquid extraction can be used as a part of the substance comprising a base and Fe in a subsequent step of adding of a substance comprising a base and Fe.

If the Al alternative is selected, i.e. the adding of a substance comprising a base and Al, a precipitation of aluminium phosphate is caused. The filtrating S42 thereby becomes a filtrating of the precipitated aluminium phosphate.

Returning to Figure 26, arrangements for the above mentioned alternatives are illustrated by dotted lines. The inlet 37 for a precipitator substance is arranged for adding a substance comprising a base and at least one of Fe and Al 119, causing a precipitation of at least one of iron phosphate and aluminium phosphate. The precipitation reactor 35 further comprises a filter 36 arranged for filtrating the precipitated at least one of iron phosphate and aluminium phosphate 120 from the acid solution. The outlet 38 for the precipitated phosphate salts is an outlet for the precipitated at least one of iron phosphate and aluminium phosphate 120.

In the case of using Fe, the arrangement may further comprise a dissolver volume 68 where the iron phosphate 120 is dissolved using e.g. HCl 101, entered though an inlet 67. A liquid-liquid extractor 69 may then be used for separating the iron phosphate 120 into phosphoric acid 121 and iron chloride 122, The iron chloride may then be reutilized as a part of the substance 119 comprising a base and Fe, as indicated by the dotted line 66. The phosphoric acid 121 can as described above also be further processed, e.g. in analogy with parts of Figure 23.

The ammonia is, after the neutralization, stripped from the solution exiting from the phosphorus removing process by any suitable ammonia stripping technology such as air stripping, steam stripping, etc. A main advantage of the ammonia stripping process is that the solution is highly concentrated. This means that ammonia stripping can be done at a high efficiency. A concentrated ammonia solution means less energy requirement for heating in order to obtain an efficient ammonia stripping process. A typical struvite leach solution contains ca 30 g N per liter. A typical ammonium containing wastewater contain ca 0.5 to 1 g N per liter. This means that by concentrating the ammonia through struvite precipitation the ammonia concentration can be increased by 30 to 60 times. This enables a more cost efficient ammonia recovery. In addition, stripping ammonia in a central plant receiving struvite from several wastewater treatment plants can take advantage of the economy of scale. Thus the costs can be considerably lower compared to stripping ammonia at each wastewater treatment plant.

The ammonia that is stripped during the process can, as has been indicated further above, be utilized in different ways. The production of ammonium bicarbonate has already been described. As indicated in e.g. Figure 23 and mentioned in connection with Figure 26, the ammonia can be allowed to react with extracted phosphoric acid to form ammonium phosphate. This is schematically illustrated in Fig. 29, where phosphoric acid 105 is provided through an inlet 96 and ammonia 109 is provided through an inlet 95 to a reactor volume 94. Formed ammonium phosphate is exited through an outlet 97.

The stripped ammonia can also be utilized within the phosphorus extraction procedure itself. In other words, the stripped ammonia is used as ammonia source for forming of the ammonium phosphates in certain embodiments of the phosphate removal process. Figure 30 illustrates this in a schematic way. The stripped ammonia 109 from the ammonia removal section 80 is used as ammonia source for forming of the ammonium phosphates in the phosphorus removing section 20.

When there is no other use of the ammonia within the process itself, it may be beneficial to recover the ammonia in easily forms that are easily handled. The stripped ammonia can, of course, be reacted with any other acid such as sulfuric acid, nitric acid, phosphoric acid, carbon dioxide, etc. to form any form of ammonium salt or ammonium salt solution as a recovered ammonium product. Figure 31 illustrates this in a schematic manner. The arrangement for struvite recovering comprises a reaction section 150 for recovering the stripped ammonia 109 from the ammonia removal section 80 by reaction with an acid 151.

In many waste water streams, there are besides sources of phosphorus and ammonium often also minor sources of potassium and sodium. When precipitating struvite in such solutions, there will typically be a mixture between a major part of struvite based on ammonium, and minor amounts of potassium struvite (MgKPO₄·6H₂O) as well as sodium struvite (MgNaPO₄·6H₂O). The potassium struvite and sodium struvite will also be dissolved in HCl, and the removal of phosphate ions from the acid solution will not be significantly affected. In the neutralization process, the potassium and sodium ions will remain in the solution, as well as during the stripping of the ammonia. Thus, if potassium struvite is present in the struvite leach solution it ends up as dissolved potassium chloride (KCI) in a magnesium chloride (MgCl₂) or calcium chloride (CaCl₂) solution.

As discussed before, smaller amounts of potassium chloride can be separated from magnesium chloride solutions by addition of a phosphorus source and pH adjustment to precipitate pure potassium struvite (MgKPO₄·6H₂O) which can be separated by solid/liquid separation. Pure potassium struvite can thereafter be further processed according to the above presented technology to separate the phosphorus and recover the potassium content. This will be discussed further below.

Struvite processing according to the presented technology results in a concentrated solution of magnesium chloride and potassium chloride. A typical concentration of magnesium chloride is up to ca 200 g per liter. To selectively crystalize potassium chloride (KCI) from magnesium chloride solutions is a common practice. In fact, a major part of potassium chloride and magnesium chloride production in the world is based on processing solutions originating from the dissolution of the mineral Carnellite KMgCl₃·6(H₂O) which is crystalized from salt lakes by evaporation. In general, magnesium chloride has a salting out effect on potassium chloride which enables selective crystallization of potassium chloride. The solubility of potassium chloride is also very temperature dependent which enables selective crystallization upon cooling.

Separation of potassium chloride from calcium chloride solutions can be done according to the same principles. Calcium chloride has a salting out effect on potassium chloride which enables selective crystallization of potassium chloride. If any sodium chloride is present together with the potassium chloride. It can be separated by fractional crystallization or according to the process described in our previous patent SE1551685-9.

If pure potassium struvite is obtained, e.g. as discussed above another possibility to process potassium struvite is to dissolve it in sulfuric acid. Thereafter to extract phosphoric acid selectively using an organic solvent. The raffinate composed of a mixture of potassium sulfate and magnesium sulfate can thereafter be crystallized as potassium magnesium phosphate (K₂SO₄·2MgSO₄). Potassium magnesium phosphate is a valuable fertilizer with a solubility of 240 g/L at 20°C and pH 7. This can be compared with the water solubility of struvite which is only ca 0.1 g/L at 25°C.

Of course, there are many other methods to separate monovalent cations from divalent cations which can be used to separate potassium chloride from calcium chloride or magnesium chloride. These include: use of selective membranes with or without combination with electro-dialysis or electro-dialysis reversal, separation through ion exchange, separation through solvent extraction, or by direct electrolysis methods.

In other words, in one embodiment, the feed material further comprises potassium struvite. Thereby, the chloride salt solution further comprises potassium chloride. Preferably, the potassium chloride in the chloride salt solution is separated from other chlorides in the chloride salt solution.

In another embodiment, the feed material further comprises sodium struvite. Thereby, the chloride salt solution further comprises sodium chloride. Preferably, the sodium chloride in the chloride salt solution is separated from other chlorides in the chloride salt solution.

Figure 32 illustrates schematically an embodiment of a part of an arrangement 1 for struvite decomposition. In this embodiment, the feed material further comprises at least one of potassium struvite and sodium struvite. Thereby, the chloride salt solution 110 further comprises at least one of potassium chloride and sodium struvite. The arrangement 1 further comprises a separator 160 connected to the outlet 83 for the chloride salt solution 110 of the ammonia removal section 80. The separator 160 is configured for separating the at least one of potassium chloride and sodium chloride124 in the chloride salt solution from other chlorides 123 in the chloride salt solution. These separated chlorides are exited through respective outlets 161, 162.

As discussed in connection with Figure 3 and Figure 4, the struvite decomposition operates particularly well in combination with a method and arrangement for recovering at least one of nitrogen, phosphorus and potassium from waste material.

In cases where the decomposing of separated struvite is performed according to the principles discussed in connection with Figure 5 and Figure 6, magnesium hydroxide is precipitated and separated. Preferably, at least a part of the precipitated magnesium hydroxide is utilized as at least a part of the magnesium source in a subsequent batch of adding a magnesium source to an initial liquid of waste material.

This is schematically illustrated in Figure 4, where the arrangement 9 for recovering at least one of nitrogen, phosphorus and potassium from waste material comprises a connection 99 between the neutralizer container of the arrangement for decomposing struvite 1 and the inlet 5 for the magnesium source 136. This is made for utilizing at least a part of the precipitated magnesium hydroxide 115 as at least a part of the magnesium source 136 in a subsequent process of adding a magnesium source 136 to an initial liquid of waste material.

Likewise, in cases where the decomposing of separated struvite is performed according to the principles discussed in connection with Figure 7 and Figure 8, magnesium chloride is separated in a salt solution. Preferably, at least a part of the solution of magnesium chloride is utilized as at least a part of the magnesium source in a subsequent batch of adding a magnesium source to an initial liquid of waste material.

This can also be interpreted in Figure 4, where the connection 99 is connected between the outlet for the chloride salt solution of the ammonia removal section and the inlet 5 for the magnesium source 136. This is made for utilizing at least a part of the solution of magnesium chloride as at least a part of the magnesium source in a subsequent process of adding a magnesium source 136 to an initial liquid of waste material.

Also, in cases where the decomposing of separated struvite is performed according to the principles discussed in connection with Figure 23 and Figure 24, magnesium phosphates are formed. Preferably, at least a part of the magnesium phosphates are utilized as at least a part of the magnesium source in a subsequent batch of adding a magnesium source to an initial liquid of waste material.

This can also be interpreted in Figure 4, where the connection 99 is connected between the outlet for the magnesium phosphates of the reactor of the phosphorus removing section and the inlet 5 for the magnesium source 136. This is made for utilizing at least a part of the precipitated magnesium hydroxide as at least a part of the magnesium source in a subsequent process of adding a magnesium source to an initial liquid of waste material.

The processes and arrangements above give a number of advantages. It becomes possible to process struvite into ammonium phosphate and a magnesium source. The magnesium source can be recycled for removal of N and P from e.g. waste water, again producing struvite.

Alternatively, it becomes possible to process struvite into calcium phosphate, ammonia and a magnesium source. The magnesium source can be recycled for removal of N and P from e.g. waste water, again producing struvite.

Alternatively, it becomes possible to process struvite into ammonia and a phosphorus and magnesium source. The phosphorus and magnesium source can be recycled for removal of N or N and P from e.g. waste water, again producing struvite.

Alternatively, it becomes possible to process struvite into phosphorus magnesium and potassium products. The magnesium product can be recycled for removal of K and P from e.g. waste water, again producing struvite.

Experiments have been performed, some of which are presented as examples here below. These experiments illustrate the large benefits that are available through the present ideas.

### Example 1

A struvite leach solution was prepared having the following composition (in g/l): 52.8 Mg, 68.6 P, and 31,3 N. The solution was contacted with an organic solvent composed of 80% by weight of tri-butyl phosphate and 20% by weight of kerosene at the following aqueous to organic volume ratios: 1/10, 115, 1/2, 1/1, 2/1, 5/1, 10/1. The extraction isotherm can be read from the following table (values are in g P/I)

| Aqueous | Organic |
|---|---|
| 20,1 | 8,4 |
| 24,6 | 12,4 |
| 36,0 | 19,4 |
| 45,8 | 24,7 |
| 55,2 | 28,0 |
| 61,3 | 30,5 |

The composition of the loaded organic solvent before scrubbing was (values are in g/l): 30.5 P, 0.3 Mg, and 0.2 N. The data shows that it is feasible to extract selectively phosphoric acid from a struvite leach solution using an organic solvent at an organic to aqueous ratio of 2:1 in a practical solvent extraction setup.

### Example 2

A struvite leach solution was prepared having the following composition (in g/l); 52.2 Mg, 66.2 P, and 29.5 N. To 200 ml added 25 g of Ca(OH)₂. A theoretical addition of 29.6 grams Ca(OH)₂ correspond to complete precipitation of phosphorus in form of di-calcium phosphate (DCP). A somewhat lower addition of lime was chosen in order to a sure that all the added lime will participate in the reaction. The slurry was agitated for two hours followed by filtration of the obtained precipitate. The filtrate and precipitate were analyzed for chemical composition.

The filtrate had the following composition (in g/l): 51.8 Mg, 17.5 P, and 29.9 N. The precipitate after washing with water had a dry matter content of 59% by weight, The chemical composition of the precipitate was as follows (values are in % of weight): 24.8 Ca, 0.5 Mg, 19.8 P, 0.1 N. The mole ratio of Ca to P was found to be 1:1 which corresponds to DCP. The example show that it is feasible to selectively precipitate phosphorus in form of DCP from a struvite leach solution.

### Example 3

A struvite leach solution after separation of phosphorus was prepared having the following elemental composition (values are in g/l): 3.3 Ca, 52.3 Mg, 0.02 P, and 25.4 N. Into 200 ml of the solution above added 44 grams of Ca(OH)₂. The solution was agitated for 3 hours. Thereafter a part of the slurry was filtrated and the filtrate analyzed for chemical composition. Filtration and washing was feasible directly after a reaction time of 3 hours. The separated precipitate was washed with water and analyzed for elemental composition.

A part of the slurry was left standing 24 hours before filtration. In that case, the crystal structure of the precipitate seems to change with time and a gel like paste formed which was not possible to filter. The composition of the filtrate obtained after reaction time of 3 hours was as follows (values are in g/l): 10.4 Ca, 0.05 Mg, 0 P, and 15.6 N. The washed precipitate had a dry matter content of 32% by weight. The elemental composition of the precipitate was as follows (values are in % of weight): 7.1 Ca, 29.9 Mg, 0 P, and 0.3 N. The result show that magnesium was selectively precipitated from the solution in form of magnesium hydroxide. During the precipitation reaction, 38.3% of the ammonia was released as a gaseous form. Gaseous ammonia release did not cause any foaming and the process is practically feasible. Residual ammonia in the obtained calcium chloride solution can be stripped according to standard technology for separation of ammonia from the calcium chloride solution.

### Example 4

The same experiment as described in example 3 was repeated but this time with a reaction time of 25 minutes. The chemical composition of the obtained filtrate was (values in g/l): 9.9 Ca, 0.06 Mg, 0 P, and 25.5 N. The composition of the washed precipitate was as follows (values are in % of weight): 2 Ca, 34.3 Mg, 0 P, and 0 N. The result show that magnesium could be selectively precipitated in form of magnesium hydroxide with a short reaction time. Filtration and washing was operationally feasible. The short reaction time resulted in almost no gaseous ammonia emissions during the reaction itself. This means that almost all ammonia can be recovered by conventional stripping form the calcium chloride solution after precipitation of magnesium hydroxide.

### Example 5

A di-magnesium phosphate precipitate was produced by reacting a phosphoric acid (having a concentration of 98 g H₃PO₄ per liter) with a magnesium hydroxide slurry (having a concentration of 58 g Mg(OH)₂ per liter) at volumetric ratio of 1:1. The obtained precipitate was filtered to a dry matter content of 73% by weight. The chemical composition of the dry precipitate was found to be (values in % of weight): 16.7 Mg, and 20.3 P. This corresponds to a magnesium to phosphorus mole ratio of 1.04 corresponding to di-magnesium phosphate. To a nitrogen containing solution having an ammonium nitrogen concentration of 1.132 g NH₄-N per liter, added 18 g of dewatered di-magnesium phosphate precipitate (addition in large excess). The pH was adjusted by addition of NaOH to a final pH of pH=8.15. The obtained precipitate was separated by filtration from the treated solution. The nitrogen content of the treated solution was decreased to 0.01 g/L which corresponds to 99.12% nitrogen removal efficiency. The filtrated precipitate (40% by weight dry matter content) was analyzed and 30% of the phosphorus content was associated with nitrogen which means that it was converted into precipitated struvite.

### Example 6

In order to investigate the reactivity of di-magnesium phosphate at high pH level, 2 grams of dewatered di-magnesium phosphate were added to 500 ml of the treated nitrogen solution of example 5. The pH of the solution was increased by addition of sodium hydroxide to a pH of 12.5. The pH was thereafter monitored online. The pH was gradually decreasing down to pH=8.8. This means that di-magnesium phosphate is reactive even at high pH and consumes alkalinity by probably conversion to tri-magnesium phosphate. This indicate that di-magnesium phosphate is a reactive component suitable for precipitation of nitrogen in form of struvite.

### Example 7

A precipitate composed of a mixture of magnesium hydroxide and tri-magnesium phosphate was prepared by adding phosphoric acid solution (17% by weight) dropwise to a 12% by weight magnesium hydroxide in water slurry to obtain a final pH level of pH=8.57. The precipitate had a magnesium to phosphorus molar ratio of 2.3. The described precipitate was added in excess to an ammonium nitrogen containing solution with a concentration of 1.14 g NH₄-N per liter. The pH was not adjusted. The nitrogen content of the treated solution decreased to 0.06 g NH4-N per liter corresponding to a removal efficiency of 95%. The filtrated precipitate was analyzed and 20% of the phosphorus content was associated with nitrogen which means that it was converted into precipitated struvite.

Removal of ammonium nitrogen by struvite precipitation is a relatively simple process requiring that there is an access to cheap sources of phosphorus and magnesium. The potential for nutrient removal in the form of struvite is discussed in more detail in the following text in the context of possible specific applications. The present technology enables the full use of such struvite precipitation.

### Domestic wastewater treatment

Anaerobic digestion of sludge during wastewater treatment results in the release of a significant fraction of the nutrients that were previously removed from the main wastewater stream. The side stream produced from the anaerobic digestion process contains high concentrations of ammonium-nitrogen, at around 500-1500 mg/l; thus, it cannot be discharged directly to natural water bodies due to adverse effects on aquatic environments. Therefore, this high ammonium concentrated digester supernatant is recycled back to the main stream treatment process where it contributes only 1% of the influent flow, but 15-30% additional nitrogen loading. Municipal wastewater is generally much higher in nitrogen relative to phosphorus. Therefore, with the addition of sufficient magnesium, the amount of struvite that can be formed from such a stream is limited by its phosphorus concentration. The concentration of potassium in such side streams is generally low since the majority of potassium continues with the main stream. This means that mainly ammonium-struvite can be precipitated.

Pilot and full-scale applications have proven that struvite precipitation is capable of removing up to 99% of the phosphorus from side streams. However, this process only removes, on average, between 5% and 10% of the nitrogen. If external magnesium and phosphorus were added to this stream, a significant portion of the residual ammonia could be removed as struvite, while considerably increasing plant ammonia removal capacity and reducing aeration costs. Side stream ammonia removal by struvite precipitation has the potential to considerably reduce the operating costs of the central biological operations, while reducing nitrous oxide emissions.

The potential for phosphorus recovery from domestic wastewater varies between 20 to 50% of the phosphorus in the feed wastewater (50% recovery requires thermal or chemical hydrolysis of the sludge, processing a side stream from bio-P process, processing reject from the anaerobic digestion, and/or processing sludge dewatering liquor).

### Landfill leachate

Landfill leachate can contain very high concentrations of ammonium nitrogen. In many cases the ammonium ion concentration is so high resulting in the inhibition of biological treatment processes due to the toxicity of ammonia. Struvite precipitation can be a simple treatment option for such waters if a cheap source of magnesium and phosphorus can be provided. For example, Li et al., 1999 showed that ammonium nitrogen contained in landfill leachate could be quickly reduced from 5618 to 112 mg/l (98% efficiency) within 15 min, when magnesium and phosphorus were applied in Mg:N:P mole ratio of 1:1:1 at a pH between 8.5 and 9.0.

### Biogas residues

Anaerobic digestion is a technology for production of biogas from organic wastes. Many different wastes can be used as feed materials. Possible feed materials for biogas production include: cow manure, pig manure, poultry manure, sewage sludge, industrial organic wastes, organic fraction of municipal wastes, slaughterhouse wastes, various crop residues, and food processing wastes. The main problem of anaerobic digestion is that it is a wet process requiring water for diluting solid organic wastes. When the carbon in the organic material is transformed into biogas, the nutrients in the organic material are released into the digester slurry. The major part of the nutrients is in dissolved form. There is a limit on maximum concentration of ammonia in the digester slurry since ammonia is toxic to the biogas-producing bacteria. For example, Siles et al., 2010 showed that when the concentration of free ammonia was increased to 620 mg/l in an ammonia toxicity test, a gradual decrease of 21% was observed for biogas production. This means that a by-product of biogas production is large amounts of dilute biogas residues. The large water content in the residues makes it logistically difficult to transport over long distances. Handling of biogas residues is a major bottleneck in biogas technology limiting the expansion of this technology. Unlike municipal wastewater treatment plants, standalone biogas plants cannot dewater the slurry to produce a solid sludge since there is no biological treatment process that can receive the nutrient rich solution. If ammonium, phosphorus and potassium could be precipitated from the digester liquids, the water could be recycled in the process, and the biogas production could be increased. Expansion of the technology can then take place independent on available nearby agricultural land for receiving dilute biogas residues. Biogas plants can be built separately from wastewater treatment plants.

### Slaughterhouse wastes

Effluents from slaughterhouse wastes contain large amounts of nutrients. It is common to treat such wastes separately by anaerobic digestion to produce biogas and a nutrient rich effluent. Experimental results given in the literature have shown that high ammonia removal of over 90% can be achieved by struvite precipitation after addition of magnesium and phosphorus to effluents from slaughterhouse wastes.

### Animal manure

Animal manure consists of predominantly urine and feces, but also may contain bedding materials, dropped feed, scurf, and other farming wastes. In society there is a trend towards urbanization and large-scale animal farming. This results in very large amounts of animal manure in certain regions. In many cases, the handling of the wet fraction of manure is a major problem limiting the possible expansion of the farm. The wet fraction of animal manure typically contains large amounts of nutrients. For example, the liquid fraction of swine or cow manure can typically contain ca 3000 mg K per liter and 1300 mg N per liter. The phosphorus content is typically considerably lower in many cases ca 50 mg P per liter due to precipitation in form of struvite and calcium phosphate ending up in the solid fraction. Advanced technological solution for handling liquid fraction have been suggested such as phosphorus removal by struvite precipitation, followed by ammonium removal by ion exchange, chemically regenerating the ion exchangers, treating the ion exchange regenerant solution by addition of chemicals and heating followed by ammonia stripping and scrubbing into an acid. This is a costly and advanced treatment process requiring knowledge and skills for operation. A much simpler approach according to the present technology would be to precipitate the nitrogen and potassium in form of struvite by addition of a magnesium and phosphorus source. The solid struvite can thereafter easily be transported to a central plant for processing the struvite. This approach can take advantage of economy of scale, as well as enable industrial symbiosis by locating the more advanced struvite processing plant in an industrial site. This can enable to utilize industrial by-products as input materials to the struvite processing plant, as well as skilled personal for the more advanced treatment.

### Fish farming effluents

Aquaculture is crucial for supplying fish for human consumption and protecting fish stocks in the wild. A recirculation aquaculture system can dramatically reduce the amount of effluent and water used in fish farming. Current practice for removing ammonia excreted by farmed fish relies on the use of a biological treatment, which is complex and costly. There is a continuous search for simpler and more cost efficient methods for ammonia removal from fish farms. EU finance several projects for solving this problem. For example, EU funded a project with the aim to develop a deammonification reactor to convert ammonia into nitrogen gas in a single step. There is a need for technologies that can enable simple ammonia removal coupled with recovery.

### Source separated urine

Research has been conducted on the separation of human urine from other toilet wastes in special toilets to enable recovery of nutrients. Urine contains about 80% of the nitrogen, 50% of the phosphorus and 60% of potassium excreted. However, urine is a too dilute fertilizer in which the total combined content of nitrogen, phosphorus and potassium is about ten grams per liter which makes large scale storage and distribution difficult. It has been shown by many researchers that addition of a magnesium source to human urine enables phosphorus removal efficiencies of above 95% by precipitation of a mixture of ammonium-struvite and potassium-struvite. Of course, if phosphorus is added to urine together with magnesium, removal of all major nutrients (phosphorus, nitrogen and potassium) is possible. This can enable recovery of the nutrients in a concentrated form.

### Food processing effluent

It is known to treat effluents from food processing by struvite precipitation to reduce the nutrient load and enable phosphorus recovery. Struvite crystallization tests using anaerobic effluent from potato processing industries showed that phosphorus removal by struvite precipitation upon addition of magnesium is a very efficient method achieving more than 90% phosphorus removal (Moerman et al., 2009). However, the interference of calcium with struvite precipitation is an important factor to be addressed. The high Ca/P molar ratio in the solution only removed 35% of the phosphorus as struvite, the rest being removed mainly as calcium phosphates. Treating liquids from food processing with a low Ca/P molar ratio still resulted in only 73% of the phosphorus being precipitated in form of struvite. The example shows that co-precipitation of calcium phosphates together with struvite is in many cases unavoidable.

A main aspect relating to struvite precipitation is that it is rarely precipitated in a pure ammonium-struvite form. Wastewater usually contain significant amounts of calcium, potassium and carbonates which usually result in a significant co-precipitation of calcium phosphates, calcium carbonates, potassium struvite, and magnesium carbonate. However, the robust technology for struvite processing presented here offers to handle all these co-precipitates.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

Haiming Huang, Lingyun Huang, Qingrui Zhang, Yang Jiang, Li Ding, 2015. Chlorination decomposition of struvite and recycling of its product for the removal of ammonium-nitrogen from landfill leachate. Chemosphere 136, 289-296.
Haiming Huang, Jiahui Liu, Jing Xiao, Peng Zhang, and Faming Gao, 2016. Highly Efficient Recovery of Ammonium Nitrogen from Coking Wastewater by Coupling Struvite Precipitation and Microwave Radiation Technology ACS Sustainable Chem. Eng., 4 (7), pp 3688-3696.
Li X.Z., Zhao Q.L., Hao X.D., Ammonium removal from landfill leachate by chemical precipitation, Waste Management, Volume 19, Issue 6, 1999, Pages 409-415.
Moerman W,, Carballa M., Vandekerckhove A., Derycke D., Verstraete W. 2009. Phosphate removal in agro-industry: Pilot- and full-scale operational considerations of struvite crystallization. Water Research, Vol 43, 7, 1887-1892.
Siles J.A., Brekelmans J., Martin M.A., Chica A.F., Martin A., 2010. Impact of ammonia and sulphate concentration on thermophilic anaerobic digestion. Bioresource Technology, Vol 101, 23, 9040-9048.
Stefanowicz, T., Napieralska-Zagozda, S., Osińska, M., Samsonowska, K., 1992. Ammonium removal from waste solutions by precipitation of MgNH₄PO₄ II. Ammonium removal and recovery with recycling of regenerate. Resour. Conserv. Recycl. 6, 339-345.
Sugiyama, S., Yokoyama, M., Ishizuka, H., Sotowa, K.I., Tomida, T., Shigemoto, N., 2005. Removal of aqueous ammonium with magnesium phosphates obtained from the ammonium-elimination of magnesium ammonium phosphate.
Wilson, C.W., 2013. Ammonia recovery from municipal wastewater through a struvite formation-thermal decomposition cycle. M.A.Sc. Thesis, Department of Civil Engineering, The University of British Columbia, Vancouver, BC.
Ying Hao, Sanjay Kumar, Jung Hoon Kwag, Jae Hwan Kim, Jeong Dae Kim, and Chang Six Ra, 2011. Recycle of electrolytically dissolved struvite as an alternative to enhance phosphate and nitrogen recovery from swine wastewater. Journal of Hazardous Materials 195, 175-181
Zhang, S., Yao, C., Feng, X., Yang, M., 2004. Repeated use of MgNH4PO4·6H2O residues for ammonium removal by acid dipping. Desalination 170, 27-32,
Zhang, T., Ding, L., Ren, H., Xiong, X., 2009. Ammonium nitrogen removal from coking wastewater by chemical precipitation recycle technology. Water Res. 43, 5209-5215,

## Claims

1. A method for decomposing struvite, comprising the steps of:
- dissolving (S10) a feed material comprising struvite (100) in HCl (101) forming an acid solution (103);
- removing (S20) phosphorus (105) from said acid solution (103), forming a phosphorus-depleted solution (106);
- forming (S70) a neutralized solution (108) by adding a base (107) to said phosphorus-depleted solution (106); and
- forming a chloride salt solution (110) from said neutralized solution (108).

2. The method according to claim 1, **characterised in that** said step of forming a chloride salt solution (110) comprises stripping (S80) of ammonia (109) from said neutralized solution (108).

3. The method according to claim 1, **characterised in that** said step of forming (S70) a neutralized solution (108) comprises adding of at least one of:
- carbon dioxide and ammonia, and
- ammonium bicarbonate;
in an amount causing precipitation of magnesium carbonate; and
**in that** said step of forming a chloride salt solution (110) comprises filtering said precipitated magnesium carbonate from said neutralized solution (108), whereby said chloride salt solution (110) comprises ammonium chloride.

4. The method according to any of the claims 1 to 3, **characterised in that** said step of removing (S20) phosphorus (105) from said acid solution (103) comprises:
- performing (S21) a liquid-liquid extraction by contacting said acid solution (103) with an organic solvent (130), whereby said organic solvent becomes loaded (111) with phosphate ions.

5. The method according to claim 4, **characterised in that** said step of removing (S20) phosphorus (105) from said acid solution (103) further comprises:
- stripping (S29) said organic solvent loaded (111) with phosphate ions with water (112B); forming a solution of phosphoric acid (105C).

6. The method according to claim 5, **characterised by** further comprising:
- reacting (S32) said solution of phosphoric acid (105C) with magnesium hydroxide (115), forming magnesium phosphates (117).

7. The method according to claim 6, **characterised in that** said magnesium phosphates (117) comprises dimagnesium phosphate.

8. The method according to any of the claims 1 to 3, **characterised in that** said step of removing (S20) phosphorus from said acid solution (103) comprises the step of:
- causing (S40) a precipitation of phosphate salts from said acid solution.

9. The method according to claim 8, **characterised in that** said step of causing (S40) a precipitation of phosphate salts comprises:
- adding (S41) a calcium-containing substance (116) selected from:
calcium carbonate,
calcium oxide, and
calcium hydroxide,
causing a precipitation of dicalcium phosphate (131); whereby said method comprises the further step of:
- filtrating (S42) said precipitated dicalcium phosphate (131) from said acid solution.

10. The method according to claim 8, **characterised in that** said step of causing (S40) a precipitation of phosphate salts comprises adding (S41) of calcium carbonate, causing a precipitation of dicalcium phosphate (131) and emission of carbon dioxide gas (118).

11. The method according to any of the claims 1 to 10, **characterised in that** said step of dissolving (S10) said feed material comprising struvite (100) in HCl (101) comprises pretreating (S12) of said dissolved material in HCl to form said acid solution (103), said pretreating (S12) comprising at least one of:
- separating of undissolved substances; and
- removing of organic compounds.

12. The method according to any of the claims 1 to 11, **characterised in that** said feed material (100) further comprises potassium struvite, whereby said chloride salt solution (110) further comprises potassium chloride.

13. A method for recovering at least one of nitrogen, phosphorus and potassium from waste material, comprising the steps of:
- precipitating (S1) struvite from an initial liquid (135) of waste material, by adding a magnesium source (136) to said initial liquid (135) of waste material and adjusting a pH of said initial liquid (135) of waste material to an alkaline pH;
- separating (S2) said precipitated struvite (100) from said initial liquid (135) of waste material;
- decomposing (S3) said separated struvite (100) by a method according to any of the claims 1 to 12.

14. An arrangement (1) for decomposing struvite (100), comprising:
- a dissolver container (10) configured for dissolving a feed material comprising struvite (100) in HCl (101) forming an acid solution (103);
said dissolver container (10) having an inlet (11) for said feed material comprising struvite (100), an inlet (12) for said HCl (101), and an outlet (13) for said acid solution (103);
- a phosphorus removing section (20) configured for removing phosphorus (105) from said acid solution (103), forming a phosphorus-depleted solution (106);
said phosphorus removing section (20) having an inlet (21) for said acid solution (103) connected to said outlet (13) of said dissolver container (10), an outlet (23) for substances comprising said removed phosphorus (105) and an outlet (22) for said phosphorus-depleted solution (106);
- a neutralizer container (70) configured for forming a neutralized solution (108) by adding a base (107) to said phosphorus-depleted solution (106);
said neutralizer container (70) having an inlet (72) for said phosphorus-depleted solution (106) connected to said outlet (22) for said phosphorus-depleted solution (106) of said phosphorus removing section (20), an inlet (71) for said base (107), and an outlet (73) for said neutralized solution (108); and
- a chloride salt solution handling section (79) configured for forming a chloride salt solution (110) from said neutralized solution (108);
said chloride salt solution handling section (79) having an inlet (81) for said neutralized solution (108) connected to said outlet (73) for said neutralized solution (108) of said neutralizer container (70), and an outlet (83) for said chloride salt solution (110).

15. An arrangement (9) for recovering at least one of nitrogen, phosphorus and potassium from waste material, comprising:
- a waste material treatment tank (2) having an inlet (3) for an initial liquid (135) of waste material and in inlet (5) for a magnesium source (136) and optionally a base (137);
said waste material treatment tank (2) being configured for precipitating struvite (100) from said initial liquid (135) of waste material by adding said magnesium source (136) and adjusting a pH of said initial liquid (135) of waste material to an alkaline pH;
said waste material treatment tank (2) comprising a separator (7) configured for separating said precipitated struvite (100) from said initial liquid (135) of waste material;
said waste material treatment tank (2) having an outlet (8) for liquid of waste material separated from said precipitated struvite (138), and an outlet (6) for said precipitated struvite (100); and
- an arrangement (1) for decomposing struvite (100) according to claim 14.

## Patentansprüche

1. Verfahren zum Zersetzen von Struvit, umfassend die Schritte:
- Auflösen (S10) eines Aufgabematerials, welches Struvit (100) enthält, in HCl (101) zum Bilden einer sauren Lösung (103);
- Entfernen (S20) von Phosphor (105) aus der sauren Lösung (103) zum Bilden einer Phosphor-abgereicherten Lösung (106);
- Bilden (S70) einer neutralisierten Lösung (108) durch Hinzufügen einer Base (107) zur Phosphor-abgereicherten Lösung (106); und
- Bilden einer Chloridsalzlösung (110) aus der neutralisierten Lösung (108).

2. Verfahren nach Anspruch 1, **dadurch gekennzeichnet, dass** der Schritt des Bildens einer Chloridsalzlösung (110) das Abziehen (S80) von Ammoniak (109) aus der neutralisierten Lösung (108) umfasst.

3. Verfahren nach Anspruch 1, **dadurch gekennzeichnet, dass** der Schritt des Bildens (S70) einer neutralisierten Lösung (108) das Hinzufügen mindestens eines der Stoffe aus der Gruppe umfassend:
- Kohlendioxid und Ammoniak; und
- Ammoniumbikarbonat;
in einer Menge, welche die Ausfällung von Magnesiumkarbonat bewirkt, umfasst; und
dass der Schritt des Bildens einer Chloridsalzlösung (110) das Filtern des ausgefällten Magnesiumkarbonats aus der neutralisierten Lösung (108) umfasst, wodurch die Chloridsalzlösung (110) Ammoniumchlorid aufweist.

4. Verfahren nach einem der Ansprüche 1 bis 3, **dadurch gekennzeichnet, dass** der Schritt des Entfernens (S20) von Phosphor (105) aus der sauren Lösung (103) umfasst:
- Ausführen (S21) einer Flüssig-Flüssig-Extraktion durch In-Kontakt-Bringen der sauren Lösung (103) mit einem organischen Lösungsmittel (130), wodurch das organische Lösungsmittel mit Phosphationen beladen wird (111).

5. Verfahren nach Anspruch 4, **dadurch gekennzeichnet, dass** der Schritt des Entfernens (S20) von Phosphor (105) aus der sauren Lösung (103) ferner umfasst:
- Abziehen (S29) des organischen Lösungsmittels (111), welches mit Phosphationen beladen ist, mit Wasser (112B) zum Bilden einer Phosphorsäurelösung (105C).

6. Verfahren nach Anspruch 5, **dadurch gekennzeichnet, dass** es ferner umfasst:
- Umsetzen (S23) der Phosphorsäurelösung (105C) mit Magnesiumhydroxid (115) zum Bilden von Magnesiumphosphaten (117).

7. Verfahren nach Anspruch 6, **dadurch gekennzeichnet, dass** die Magnesiumphosphate (117) Dimagnesiumphosphat aufweisen.

8. Verfahren nach einem der Ansprüche 1 bis 3, **dadurch gekennzeichnet, dass** der Schritt des Entfernens (S20) von Phosphor aus der sauren Lösung (103) den folgenden Schritt umfasst:
- Verursachen (S40) einer Ausfällung von Phosphatsalzen aus der sauren Lösung.

9. Verfahren nach Anspruch 8, **dadurch gekennzeichnet, dass** der Schritt des Verursachens (S40) einer Ausfällung von Phosphatsalzen umfasst:
- Hinzufügen (S41) einer kalziumhaltigen Substanz (116) ausgewählt aus:
Kalziumkarbonat,
Kalziumoxid, und
Kalziumhydroxid,
Verursachen einer Ausfällung von Dikalziumphosphat (131); wobei das Verfahren ferner den folgenden Schritt umfasst:
- Filtrieren (S42) des ausgefällten Dikalziumphosphats (131) aus der sauren Lösung.

10. Verfahren nach Anspruch 8, **dadurch gekennzeichnet, dass** der Schritt des Verursachens (S40) einer Ausfällung von Phosphatsalzen das Hinzufügen (S41) von Kalziumkarbonat umfasst, wodurch eine Ausfällung von Dikalziumphosphat (131) und eine Emission von Kohlendioxidgas (118) verursacht wird.

11. Verfahren nach einem der Ansprüche 1 bis 10, **dadurch gekennzeichnet, dass** der Schritt des Auflösens (S10) des Aufgabematerials, welches Struvit (100) enthält, in HCl (101) das Vorbehandeln (S12) des aufgelösten Materials in HCl zum Bilden der sauren Lösung (103) umfasst, wobei das Vorbehandeln (S12) mindestens einen der folgenden Schritte umfasst:
- Abtrennen nicht aufgelöster Substanzen; und
- Entfernen organischer Verbindungen.

12. Verfahren nach einem der Ansprüche 1 bis 11, **dadurch gekennzeichnet, dass** das Aufgabematerial (100) ferner Kaliumstruvit enthält, wodurch die Chloridsalzlösung (110) ferner Kaliumchlorid enthält.

13. Verfahren zum Rückgewinnen mindestens einer der Substanzen aus der Gruppe umfassend Stickstoff, Phosphor und Kalium aus Abfallmaterial, umfassend die Schritte:
- Ausfällen (S1) von Struvit aus einer Abfallmaterialausgangsflüssigkeit (135) durch Hinzufügen einer Magnesiumquelle (136) zur Abfallmaterialausgangsflüssigkeit (135) und Einstellen eines pH-Werts der Abfallmaterialausgangsflüssigkeit (135) auf einen alkalischen pH-Wert;
- Abtrennen (S2) des ausgefällten Struvits (100) von der Abfallmaterialausgangsflüssigkeit (135);
- Zersetzen (S3) des abgetrennten Struvits (100) durch ein Verfahren nach einem der Ansprüche 1 bis 12.

14. Anordnung (1) zum Zersetzen von Struvit (100), aufweisend:
- einen Dissolverbehälter (10), welcher dafür eingerichtet ist, ein Aufgabematerial, welches Struvit (100) enthält, zum Bilden einer sauren Lösung (103) in HCl (101) aufzulösen;
wobei der Dissolverbehälter (10) einen Einlass (11) für das Aufgabematerial, welches Struvit (100) enthält, einen Einlass (12) für das HCl (101) und einen Auslass (13) für die saure Lösung (103) aufweist;
- einen Phosphorentfernungsabschnitt (20), welcher dafür eingerichtet ist, Phosphor (105) aus der sauren Lösung (103) zu entfernen, um eine Phosphor-abgereicherte Lösung (106) zu bilden;
wobei der Phosphorentfernungsabschnitt (20) einen Einlass (21) für die saure Lösung (103), welcher mit dem Auslass (13) des Dissolverbehälters (10) verbunden ist, einen Auslass (23) für Substanzen, welche den entfernten Phosphor (105) enthalten, und einen Auslass (22) für die Phosphor-abgereicherte Lösung (106) aufweist;
- einen Neutralisatorbehälter (70), welcher dafür eingerichtet ist, eine neutralisierte Lösung (108) durch Hinzufügen einer Base (107) zur Phosphor-abgereicherten Lösung (106) zu bilden;
wobei der Neutralisatorbehälter (70) einen Einlass (72) für die Phosphor-abgereicherte Lösung (106), welcher mit dem Auslass (22) für die Phosphor-abgereicherte Lösung (106) des Phosphorentfernungsabschnitts (20) verbunden ist, einen Einlass (71) für die Base (107) und einen Auslass (73) für die neutralisierte Lösung (108) aufweist; und
- einen Abschnitt zur Handhabung der Chloridsalzlösung (79), welcher dafür eingerichtet ist, aus der neutralisierten Lösung (108) eine Chloridsalzlösung (110) zu bilden;
wobei der Abschnitt zur Handhabung der Chloridsalzlösung (79) einen Einlass (81) für die neutralisierte Lösung (108), welcher mit dem Auslass (73) für die neutralisierte Lösung (108) des Neutralisatorbehälters (70) verbunden ist, und einen Auslass (83) für die Chloridsalzlösung (110) aufweist.

15. Anordnung (9) zum Rückgewinnen mindestens einer der Substanzen aus der Gruppe umfassend Stickstoff, Phosphor und Kalium aus Abfallmaterial, aufweisend:
- einen Abfallmaterialaufbereitungstank (2), welcher einen Einlass (3) für eine Abfallmaterialausgangsflüssigkeit (135) und einen Einlass (5) für eine Magnesiumquelle (136) und gegebenenfalls eine Base (137) aufweist;
wobei der Abfallmaterialaufbereitungstank (2) dafür eingerichtet ist, Struvit (100) aus der Abfallmaterialausgangsflüssigkeit (135) auszufällen, indem die Magnesiumquelle (136) hinzugefügt und ein pH-Wert der Abfallmaterialausgangsflüssigkeit (135) auf einen alkalinen pH-Wert eingestellt wird;
wobei der Abfallmaterialaufbereitungstank (2) einen Abscheider (7) aufweist, welcher dafür eingerichtet ist, das ausgefällte Struvit (100) von der Abfallmaterialausgangsflüssigkeit (135) abzuscheiden;
wobei der Abfallmaterialaufbereitungstank (2) einen Auslass (8) für Abfallmaterialflüssigkeit, von welcher das ausgefällte Struvit abgeschieden worden ist (138), und einen Auslass (6) für das ausgefällte Struvit (100) aufweist; und
- eine Anordnung (1) zum Zersetzen von Struvit (100) nach Anspruch 14.

## Revendications

1. Procédé de décomposition de la struvite, comprenant les étapes suivantes :
- la dissolution (S10) d'une matière première comprenant de la struvite (100) dans du HCl (101) pour former une solution acide (103) ;
- l'élimination (S20) du phosphore (105) provenant de ladite solution acide (103), formant une solution appauvrie en phosphore (106) ;
- la formation (S70) d'une solution neutralisée (108) par l'ajout d'une base (107) à ladite solution appauvrie en phosphore (106) ; et
- la formation d'une solution de sel de chlorure (110) à partir de ladite solution neutralisée (108).

2. Procédé selon la revendication 1, **caractérisé en ce que** ladite étape de formation d'une solution de sel de chlorure (110) comprend le stripage (S80) de l'ammoniac (109) à partir de ladite solution neutralisée (108).

3. Procédé selon la revendication 1, **caractérisé en ce que** ladite étape de formation (S70) d'une solution neutralisée (108) comprend l'ajout d'au moins l'un parmi :
- du dioxyde de carbone et de l'ammoniac, et
- du bicarbonate d'ammonium ;
dans une quantité entraînant la précipitation du carbonate de magnésium ; et **en ce que** ladite étape de formation d'une solution de sel de chlorure (110) consiste à filtrer ledit carbonate de magnésium précipité à partir de ladite solution neutralisée (108), de sorte que ladite solution de sel de chlorure (110) comprenne du chlorure d'ammonium.

4. Procédé selon l'une quelconque des revendications 1 à 3, **caractérisé en ce que** ladite étape d'élimination (S20) du phosphore (105) provenant de ladite solution acide (103) comprend :
- la réalisation (S21) d'une extraction liquide-liquide par mise en contact de ladite solution acide (103) avec un solvant organique (130), de sorte que ledit solvant organique se charge (111) en ions phosphate.

5. Procédé selon la revendication 4, **caractérisé en ce que** ladite étape d'élimination (S20) du phosphore (105) provenant de ladite solution acide (103) comprend en outre :
- le stripage (S29) dudit solvant organique chargé (111) en ions phosphate avec de l'eau (112B); entraînant la formation d'une solution d'acide phosphorique (105C).

6. Procédé selon la revendication 5, **caractérisé en ce qu'**il comprend en outre :
- la mise en réaction (S32) de ladite solution d'acide phosphorique (105C) avec de l'hydroxyde de magnésium (115), entraînant la formation de phosphates de magnésium (117).

7. Procédé selon la revendication 6, **caractérisé en ce que** lesdits phosphates de magnésium (117) comprennent du phosphate de dimagnésium.

8. Procédé selon l'une quelconque des revendications 1 à 3, **caractérisé en ce que** ladite étape d'élimination (S20) du phosphore provenant de ladite solution acide (103) comprend l'étape :
- consistant à provoquer (S40) une précipitation des sels de phosphate à partir de ladite solution acide.

9. Procédé selon la revendication 8, **caractérisé en ce que** ladite étape consistant à provoquer (S40) une précipitation des sels de phosphate comprend :
- l'ajout (S41) d'une substance calcique (116) choisie parmi :
le carbonate de calcium,
l'oxyde de calcium, et
l'hydroxyde de calcium,
provoquant une précipitation de phosphate dicalcique (131) ; de sorte que ledit procédé comprend l'étape supplémentaire de :
- filtration (S42) dudit phosphate dicalcique précipité (131) à partir de ladite solution acide.

10. Procédé selon la revendication 8, **caractérisé en ce que** ladite étape consistant à provoquer (S40) une précipitation des sels de phosphate comprend l'ajout (S41) de carbonate de calcium, provoquant une précipitation de phosphate dicalcique (131) et l'émission de gaz carbonique (118).

11. Procédé selon l'une quelconque des revendications 1 à 10, **caractérisé en ce que** ladite étape de dissolution (S10) de ladite matière première comprenant de la struvite (100) dans du HCl (101) comprend un prétraitement (S12) de ladite matière dissoute dans du HCl pour former ladite solution acide (103), ledit prétraitement (S12) comprenant au moins l'une des opérations suivantes :
- la séparation des substances non dissoutes ; et
- l'élimination des composés organiques.

12. Procédé selon l'une quelconque des revendications 1 à 11, **caractérisé en ce que** ladite matière première (100) comprend en outre de la struvite potassique, de sorte que ladite solution de sel de chlorure (110) comprend en outre du chlorure de potassium.

13. Procédé de récupération d'au moins un élément parmi l'azote, le phosphore et le potassium à partir d'un matériau de déchet, comprenant les étapes suivantes :
- la précipitation (S1) de la struvite à partir d'un liquide initial (135) de la matière résiduelle, en ajoutant une source de magnésium (136) audit liquide initial (135) de la matière résiduelle et en ajustant le pH dudit liquide initial (135) de la matière résiduelle à un pH alcalin ;
- la séparation (S2) de ladite struvite précipitée (100) à partir dudit liquide initial (135) de la matière résiduelle ;
- la décomposition (S3) de ladite struvite séparée (100) par un procédé selon l'une quelconque des revendications 1 à 12.

14. Agencement (1) destiné à la décomposition de la struvite (100), comprenant :
- un récipient de dissolution (10) configuré pour dissoudre une matière première comprenant de la struvite (100) dans du HCl (101) afin de former une solution acide (103) ;
ledit récipient de dissolution (10) comportant une entrée (11) pour ladite matière première comprenant de la struvite (100), une entrée (12) pour ledit HCl (101), et une sortie (13) pour ladite solution acide (103) ;
- une section d'élimination du phosphore (20) configurée pour éliminer le phosphore (105) de ladite solution acide (103), afin de former une solution appauvrie en phosphore (106) ;
ladite section d'élimination du phosphore (20) comportant une entrée (21) pour ladite solution acide (103) reliée à ladite sortie (13) dudit récipient de dissolution (10), une sortie (23) pour les substances comprenant ledit phosphore éliminé (105) et une sortie (22) pour ladite solution appauvrie en phosphore (106) ;
- un récipient de neutralisation (70) configuré pour former une solution neutralisée (108) en ajoutant une base (107) à ladite solution appauvrie en phosphore (106) ;
ledit conteneur de neutralisation (70) comportant une entrée (72) pour ladite solution appauvrie en phosphore (106) reliée à ladite sortie (22) pour ladite solution appauvrie en phosphore (106) de ladite section d'élimination du phosphore (20), une entrée (71) pour ladite base (107), et une sortie (73) pour ladite solution neutralisée (108) ; et
- une section de manipulation de la solution de sel de chlorure (79) configurée pour former une solution de sel de chlorure (110) à partir de ladite solution neutralisée (108) ;
ladite section de manipulation de solution de sel de chlorure (79) comportant une entrée (81) pour ladite solution neutralisée (108) reliée à ladite sortie (73) pour ladite solution neutralisée (108) dudit récipient de neutralisation (70), et une sortie (83) pour ladite solution de sel de chlorure (110).

15. Agencement (9) destiné à récupérer au moins l'un parmi l'azote, le phosphore et le potassium à partir de matières résiduelles, comprenant :
- un réservoir de traitement des déchets (2) comportant une entrée (3) pour un liquide initial (135) de matières résiduelles et une entrée (5) pour une source de magnésium (136) et éventuellement une base (137) ;
ledit réservoir de traitement des matières résiduelles (2) étant configuré pour faire précipiter la struvite (100) à partir dudit liquide initial (135) de matières résiduelles en ajoutant ladite source de magnésium (136) et en ajustant le pH dudit liquide initial (135) de matières résiduelles à un pH alcalin ;
ledit réservoir de traitement des déchets (2) comprenant un séparateur (7) configuré pour séparer ladite struvite précipitée (100) dudit liquide initial (135) des matières résiduelles ;
ledit réservoir de traitement des déchets (2) comportant une sortie (8) pour le liquide des matières résiduelles séparé de ladite struvite précipitée (138), et une sortie (6) pour ladite struvite précipitée (100) ; et
- un dispositif (1) de décomposition de la struvite (100) selon la revendication 14.
